(19) Europäisches Patentamt
European Patent Office
Office européen des brevets

(11) EP 1 853 644 B1

(12) # FASCICULE DE BREVET EUROPEEN

(45) Date de publication et mention de la délivrance du brevet:
**18.06.2008 Bulletin 2008/25**

(21) Numéro de dépôt: **06709281.7**

(22) Date de dépôt: **09.02.2006**

(51) Int Cl.:
***C08G 65/22*** *(2006.01)* ***C08G 65/321*** *(2006.01)*
***C08G 65/24*** *(2006.01)*

(86) Numéro de dépôt international:
**PCT/FR2006/000295**

(87) Numéro de publication internationale:
**WO 2006/087449 (24.08.2006 Gazette 2006/34)**

(54) **COPOLYMERE D'OXYDE D'ETHYLENE OU DE PROPYLENE ET D'UN OXIRANE PORTANT UN GROUPEMENT IONIQUE**

COPOLYMER VON PROPYLEN- ODER ETHYLENOXID UND EINEM OXIRAN MIT EINER IONISCHEN GRUPPE

COPOLYMER OF PROPYLENE OR ETHYLENE OXIDE AND OF AN OXIRANE BEARING AN IONIC GROUP

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.02.2005 FR 0501582**

(43) Date de publication de la demande:
**14.11.2007 Bulletin 2007/46**

(73) Titulaire: **Batscap**
**29500 Ergué-Gabéric (FR)**

(72) Inventeurs:
- **SANCHEZ, Jean-Yves**
**F-38330 Saint Ismier (FR)**
- **DESCHAMPS, Marc**
**F-29000 Quimper (FR)**
- **ALLOIN, Fannie**
**F-38220 Vezille (FR)**
- **CHAUVIN, Christophe**
**F-38090 Vaulx Milieu (FR)**
- **IOJOIU, Christina**
**F-38000 Grenoble (FR)**

(74) Mandataire: **Sueur, Yvette et al**
**Cabinet SUEUR et L'HELGOUALCH,**
**109, boulevard Haussmann**
**75008 Paris (FR)**

(56) Documents cités:
**EP-A- 0 657 484** **US-A- 3 243 455**
**US-A- 3 706 706**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 853 644 B1

Printed by Jouve, 75001 PARIS (FR)

## Description

La présente invention concerne un copolymère d'oxyde d'éthylène ou d'oxyde de propylène et d'au moins un oxirane substitué portant un groupement ionique, un procédé pour sa préparation, ainsi que diverses utilisations.

Il est connu d'utiliser des polymères solvatants pour l'élaboration de matériaux à conduction ionique. Les polymères d'oxyde d'éthylène ou de dioxolane sont des polymères solvatants vis à vis des cations, en particulier des cations alcalins tels que par exemple l'ion $Li^+$ présent dans les générateurs électrochimiques rechargeables du type batterie au lithium à électrolyte polymère. Le caractère semi-cristallin des polymères a pour conséquence de diminuer la conductivité des matériaux qui les contiennent. La cristallinité des polymères semi-cristallins a été diminuée par introduction d'irrégularités dans la chaîne macromoléculaire, sans affecter les propriétés solvatantes et la stabilité électrochimique du copolymère ainsi obtenu. Cependant, on a constaté que l'introduction d'irrégularités dans la chaîne polyéther s'accompagnait fréquemment d'une diminution des masses molaires par rapport à l'homopolymère d'oxyde d'éthylène et des propriétés mécaniques, notamment à haute température. On a cherché à remédier à cet inconvénient en introduisant dans le polymère des motifs qui permettent la formation de réseaux tridimensionnels par une réticulation du copolymère, après sa mise en forme. L'introduction de tels motifs dans un copolymère a permis en outre de fixer divers groupements, et notamment des groupements ioniques, sur la chaîne macromoléculaire. Par exemple, EP 0 603 370 décrit des copolymères comprenant des unités récurrentes provenant d'un oxirane et d'un dioxolane et portant éventuellement des groupements permettant une réticulation avec un troisième monomère, l'exemple de troisième monomère cité comprenant un segment fluoré entre un groupe polymérisable et un groupement ionique ; le matériau réticulé comprend alors des groupements ioniques reliés à une chaîne principale par des segments fluorés. EP 0 657 484 décrit un copolymère comprenant un substituant latéral du type alkyl(perfluoroalkyl)sulfonate éther, par exemple $-CH_2-O-(CF_2)_p-SO_3Li$. EP 0 671 386 décrit des monomères disulfonates perfluorés et des polymères obtenus à partir de ces monomères, dans lesquels les groupements en bout de chaîne sont des sulfonates. Dans les deux cas, les électrolytes contenant lesdits polymères présentent un nombre de transport cationique $t^+$ sensiblement égal à 1. Cependant, l'incorporation du motif fluoré implique la synthèse d'un monomère très coûteux qui n'est pas entièrement consommé au cours de la polymérisation. En effet, la fonction ionique de type perfluorosulfonate est attachée à la chaîne principale de polyéther. De tels polymères peuvent être obtenus :

- par préparation d'un oxirane portant un anion perfluorosulfonate, et copolymérisation dudit oxirane avec l'oxyde d'éthylène ou l'oxyde de propylène ;
- par préparation d'un composé comportant au moins une double liaison C=C dans laquelle l'un des atomes de carbone porte un groupe anionique perfluorosulfonate, et incorporation dudit composé par réticulation à un polyéther portant des doubles liaisons C=C.

Le but de la présente invention est de proposer un nouveau copolymère ayant une bonne tenue mécanique qui comprend des unités récurrentes du type oxyalkylène parmi lesquelles certaines portent des groupements ioniques et éventuellement certaines portent des groupements fonctionnels variés, ledit copolymère présentant des performances au moins analogues aux copolymères de l'art antérieur, mais pouvant être préparé à partir de monomères moins coûteux et moins toxiques que ceux de l'art antérieur, du fait de l'absence de monomères perfluorés.

Un objet de la présente invention est par conséquent un copolymère. Un autre objet de l'invention est un procédé de préparation dudit copolymère. D'autres objets sont constitués par un matériau réticulé obtenu à partir du copolymère, et un matériau à conduction ionique contenant ledit copolymère, ainsi que divers dispositifs électrochimiques dans lesquels l'électrolyte et/ou une électrode contiennent ledit copolymère.

Un copolymère selon la présente invention est caractérisé en ce que sa chaîne comprend :

- des unités récurrentes $-O-CH_2-CHR-$ dans lesquelles R est H ou $CH_3$ ;
- des unités récurrentes $-O-CH_2-CH(-CH_2-O-SO_3^-Li^+)-$ ;
- éventuellement des unités récurrentes $-O-CH_2-CH(-CH_2R')-$ dans lesquelles R' est un groupe fonctionnel.

Dans la suite du texte, les unités récurrentes $-O-CH_2-CHR-$, $-O-CH_2-CH(-CH_2-O-SO_3^-Li^+)-$ et $-O-CH_2-CH(-CH_2R')-$seront désignées respectivement par U(R), U(Li) et U(R'). Leur proportion molaire dans un copolymère donné est désignée respectivement par N(R), N(Li) et N(R'). De préférence, $70 \leq N(R) \leq 95$, $2{,}5 \leq N(Li) \leq 15$, et $0 \leq N(R') \leq 20$.

Un copolymère selon l'invention peut être un copolymère dans lequel les différentes unités récurrentes sont réparties de manière statistique. Un copolymère selon l'invention peut en outre être un copolymère à blocs qui comprend un ou plusieurs segments constitués d'unités U(R), un ou plusieurs segments constitués d'unités U(Li) et éventuellement un ou plusieurs segments constitués d'unités U(R').

Dans un mode de réalisation, tous les substituants R' d'un copolymère donné représentent le même groupe fonctionnel. Dans un autre mode de réalisation, les substituants R' représentent des groupes fonctionnels différents.

Les groupes fonctionnels R' peuvent être choisis parmi les groupes permettant une réticulation du copolymère, ou parmi les groupements polaires. Comme exemple de groupe fonctionnel permettant la réticulation du copolymère, on peut citer OH, le groupe époxy, le groupe allyléther $CH_2$=CH-$CH_2$-O-, le groupe méthallyléther $CH_2$=C($CH_3$) -$CH_2$-O-, les groupes du type vinyléther $R^1$CH=C$R^2$-O- ou $R^1$CH=C$R^2$-O-$CH_2$-$CH_2$-O- dans lesquels $R^1$ et $R^2$ représentent indépendamment l'un de l'autre H, un groupe alkyle, un groupe alkényle ou un groupe aryle, le groupe acrylate $CH_2$=CH-C (O)-O-, le groupe méthacrylate $CH_2$=C($CH_3$)-C(O)-O-, le groupe styrényle $CH_2$=CH(Ph)-$CH_2$-, le groupe vinyl benzoate $CH_2$=CH (Ph) C (O)-O-, le groupe cinnamate (Ph)-CH=CH-C(O)-O-, ou un groupe -O-CO-NH-$R^3$-Si($OR^4$)$_3$ dans lequel $R^4$ est un radical alkyle ayant de 1 à 3 atomes de carbone et $R^3$ est un groupe alkylène, par exemple -$(CH_2)_3$-. Comme exemple de groupe polaire, on peut citer -CN, -OH, les groupes carbonate cyclique, sulfolane, sulfoxyde, sulfone, et sulfonamide.

Dans le présente texte, et sauf indication expresse contraire, "groupe alkyle" signifie un groupe alkyle linéaire ou ramifié, ayant de préférence de 1 à 10 atomes de carbone ; "groupe alkényle" signifie un groupe hydrocarboné linéaire ou ramifié ayant au moins une double liaison >C=C<, et ayant de préférence de 2 à 10 atomes de carbone ; "groupe aryle" signifie un groupe comprenant au moins un noyau aromatique hydrocarboné, portant éventuellement un ou plusieurs substituants ; Ph représente un groupe phényle.

Un copolymère selon l'invention comprenant des unités récurrentes U(R') dans lesquelles R' est un groupe $R'^1$ permettant une réticulation, peut être soumis à une réticulation pour l'obtention d'un matériau réticulé présentant une conduction ionique. Un autre objet de l'invention est par conséquent un matériau réticulé constitué par des chaînes principales constituées par des unités récurrentes -O-$CH_2$-CHR- dans lesquelles R est H ou $CH_3$, des unités récurrentes -O-$CH_2$-CH(-$CH_2$-O-$SO_3^-M^+$)- dans lesquelles M représente un métal alcalin, éventuellement des unités récurrentes -O-$CH_2$-CH(R')- dans lesquelles R' est un groupe $R'^2$ polaire, et des unités récurrentes -O-$CH_2$-CH(-X-)- dans lesquelles -X- est un chaînon de liaison entre les chaînes principales. Une chaîne principale telle que définie ci-dessus est désignée ci-après par chaîne CP. Le chaînon de liaison dépend de la nature du groupe $R'^1$ et du mode de réticulation.

Un copolymère, selon l'invention peut être réticulé par condensation lorsque $R'^1$ est OH. Par exemple, deux groupes OH de deux unités récurrentes forment un pont uréthanne -CO-NH-∼∼∼-NH-CO- par réaction avec un diisocyanate O=C=N∼∼∼-N=C=O, le diisocyanate pouvant être un alkylène diisocyanate, un toluène 2,4-diisocyanate, un toluène 2,6-diisocyanate, un oligooxyalkylène $\alpha,\omega$-diisocyanate (par exemple un PEG diisocyanate), ou un PTHF diisocyanate. La figure 1 représente un schéma réactionnel pour une condensation à l'aide de 1,6-diisocyanatohexane (HMDI). Il est possible de limiter la densité de réticulation du matériau obtenu à partir du copolymère, en ajoutant au copolymère lors de la réticulation, un monomère portant une seule fonction isocyanate. Il est en outre possible de limiter la densité de réticulation en ajoutant à HMDI et au copolymère lors de l'étape de réticulation, un polyalkylène $\alpha,\omega$-diol. Ce polyalkylène diol joue alors le rôle d'un espaceur.

Un copolymère selon l'invention portant des groupes OH peut aussi être réticulé en traitant les groupes OH par le 3-isocyanatopropyl triéthoxysilane (commercialisé par exemple par la société ABCR sous la référence SII6455) . Une unité récurrente U(OH) ainsi traitée donne l'unité récurrente représentée par la formule U(1) suivante .

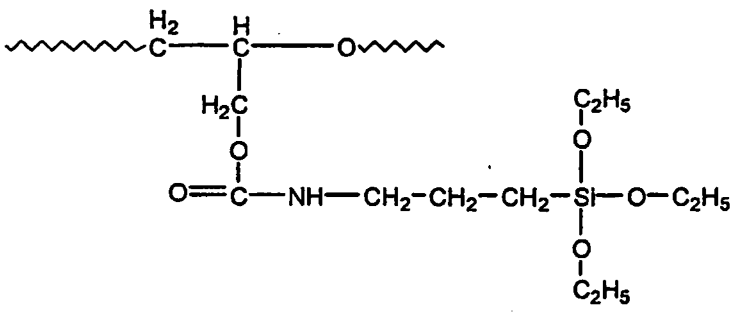

Une telle unité récurrente U(1) permet une réticulation par hydrolyse acido-catalysée des fonctions -O-$C_2H_5$. Le matériau réticulé qui en résulte comprend des chaînes CP reliées par des segments X répondant à la formule

$$[[\text{-O-C(=O)-NH-}CH_2\text{-}CH_2\text{-}CH_2\text{-}SiO_{3/2}]_n$$

Dans une variante, on peut ajouter du tétraéthoxysilane à un polymère comprenant des unités récurrentes U (1) et réaliser ensuite l'hydrolyse - condensation des fonctions -O-$C_2H_5$. On crée ainsi un réseau de silice interconnecté avec les chaînes polyéther.

Un copolymère selon l'invention peut être réticulé par voie cationique sous irradiation UV lorsque R' est un

groupe époxy ou un groupe vinyléther capable de polymériser par voie cationique sous UV en présence d'un photo-amorceur.

Lorsque R' est un groupe vinyléther $CHR^1=CR^2-O-$, le groupement latéral de l'unité récurrente est $-CH_2-O-CR^2=CHR^1$. Le groupe de liaison formé par la réaction entre deux tels groupes peut être représenté par

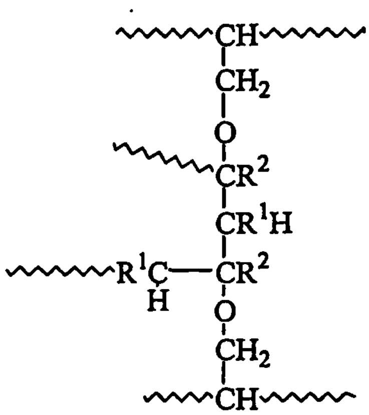

Il est possible de limiter la densité de réticulation du matériau en ajoutant au copolymère lors de l'étape de réticulation, un monomère porteur d'un seul groupe fonctionnel polymérisable de même nature que le groupe R' ou un oligomère portant deux groupes fonctionnels terminaux de même nature que le groupe R' [par exemple le poly(1,4-butanediol)divinyléther commercialisé par exemple sous la référence 41,017-9 par la société Aldrich, lorsque R' est du type vinyléther].

Lorsque R' est un groupe époxyéther, le groupe latéral de l'unité récurrente est

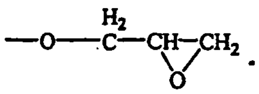

Le groupe de liaison formé par la réaction entre deux tels groupes peut être représenté par

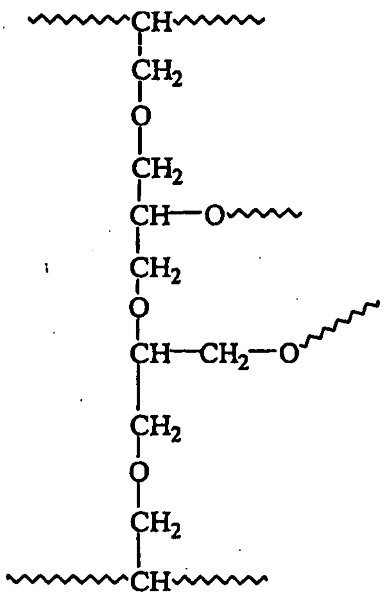

Lorsque R' est une fonction vinyléther, une réticulation du copolymère peut être effectuée par une réaction

donneur-accepteur, en ajoutant au milieu réactionnel lors de la réticulation un maléimide, un anhydride maléique, un bismaléimide qui répond à l'une des formules

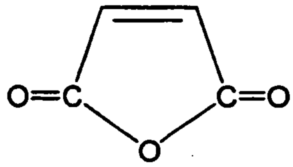

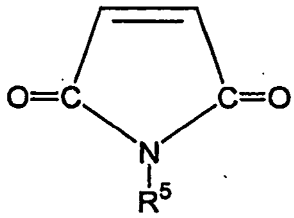

,

ou un mélange de maléimide et bismaléimide, $R^5$ représentant H, un alkyle, un aryle, un oligosiloxane, un N-alkylmaléimide, N-arylmaléimide, N-oligosilylmaléimide. On peut utiliser avantageusement comme photo-amorceur, l'oxyde de 2,4,6-triméthylbenzoylphényléthylphosphore (TEPO) avec une lampe UV à vapeur de mercure opérant entre 250 et 440 nm.

Le polymère réticulé résultant peut être représenté schématiquement par la formule suivante, lorsque R est H :

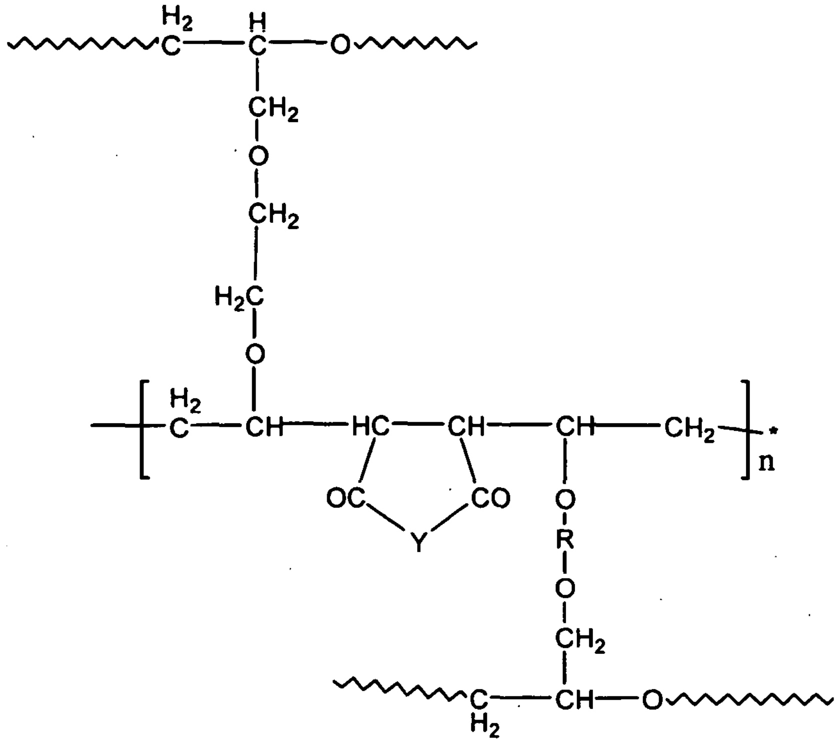

dans laquelle Y représente O ou $NR^5$, et n représente le nombre d'unités récurrentes du copolymère alterné qui relie deux chaînes du copolymère non réticulé objet de la présente invention, (n étant de 1 à 50, de préférence de 1 à 10). Pour diminuer la rigidité du copolymère, il est avantageux d'utiliser un oligomère flexible du type polydiméthoxysilane terminé par des fonctions bis-maléimide.

Un copolymère selon l'invention peut être réticulé par voie radicalaire thermique ou sous irradiation UV lorsque R' représente un groupe acrylate, méthacrylate, cinnamate ou styrényle. Deux groupes forment alors ensemble un chaînon de liaison qui peut être représenté par la formule ci-dessous.

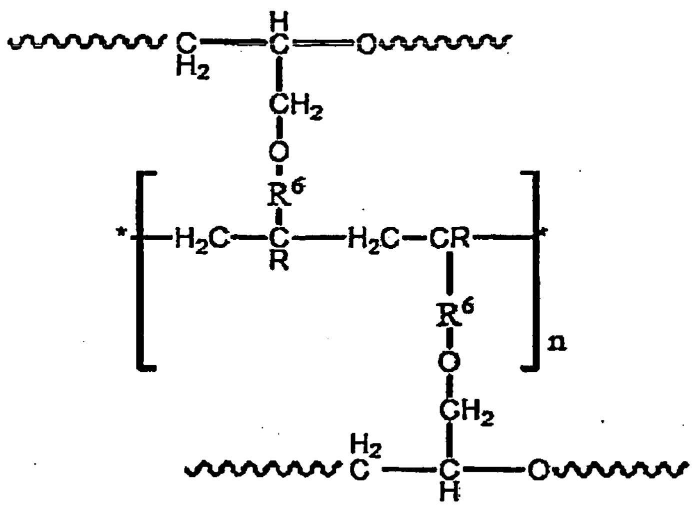

$R^6$ = 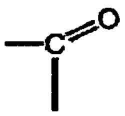 ou 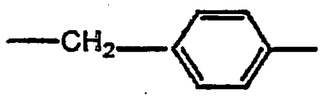 ou 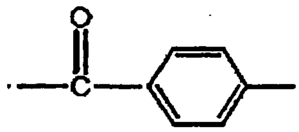

Ici également, la densité de réticulation du matériau réticulé obtenu par réticulation du copolymère à conduction ionique selon l'invention peut être limitée en ajoutant audit copolymère lors de l'étape de réticulation, un monomère portant un seul groupe polymérisable de même nature que le groupe R' du copolymère.

Enfin, plusieurs copolymères selon l'invention peuvent être mélangés puis co-réticulés ou associés pour former des réseaux semi-interpénétrés ou interpénétrés.

Un matériau co-réticulé peut être obtenu en mélangeant un premier copolymère selon l'invention ayant des unités U(R') et un second copolymère selon l'invention ayant des unités U(R'), les groupes R' des deux copolymères étant capables de réagir entre eux, puis en faisant réticuler le mélange.

Un réseau semi-interpénétré est obtenu en réticulant une membrane constituée d'un premier copolymère ayant des unités U(R') qui permettent une polymérisation en présence d'un catalyseur approprié, puis en faisant gonfler ladite membrane par une solution d'un second copolymère ayant des unités U(R') qui ne permettent pas la réticulation.

Un réseau interpénétré est obtenu en préparant une membrane réticulée à partir d'un premier copolymère ayant des unités U(R') qui permettent la réticulation, en présence d'un catalyseur approprié, et en faisant gonfler ladite membrane réticulée par une solution d'un second copolymère ayant des unités U(R') qui permettent la réticulation, en présence d'un catalyseur approprié, puis en réticulant le second copolymère. Dans ce cas, les deux réseaux sont interpénétrés mais ne sont pas liés l'un à l'autre par des liaisons covalentes. La réticulation a lieu de manière séquentielle, l'un des polymères étant réticulé avant l'autre. Dans un autre mode de préparation d'un réseau interpénétré, la réticulation des deux copolymères est effectuée simultanément. Ce mode de préparation consiste par exemple, à mélanger un copolymère dans lequel les groupes R' permettent une photoréticulation par voie radicalaire (par exemple R' est un groupe méthacrylate) à un copolymère dans lequel les groupes R' permettent une photoréticulation par voie cationique (par exemple R' porte un groupe OH). L'utilisation d'un photo-amorceur actif dans les deux types de réticulation, d'une longueur d'onde d'irradiation spécifique à la photoréticulation par voie cationique et d'une longueur d'onde spécifique à la voie radicalaire permet de créer en une seule étape un réseau interpénétré dans lequel les deux copolymères utilisés comme produits de départ ne sont pas reliés par liaison covalente, du fait qu'un groupe réticulable R' de l'un des copolymères ne copolymérise pas avec le groupe réticulable R' de l'autre copolymère dans les conditions opératoires.

Des exemples sont donnés ci-après, à partir d'un copolymère statistique P1 de formule

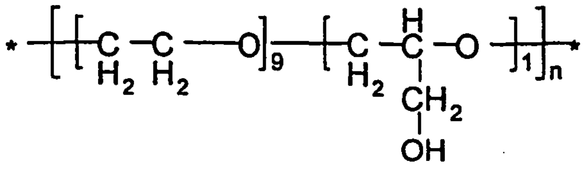

P1

On prépare un terpolymère A répondant à la formule suivante, en estérifiant 80% des groupes OH du polymère P1 sous forme de sulfate ester de lithium $-O-SO_3Li$ :

Terpolymère A

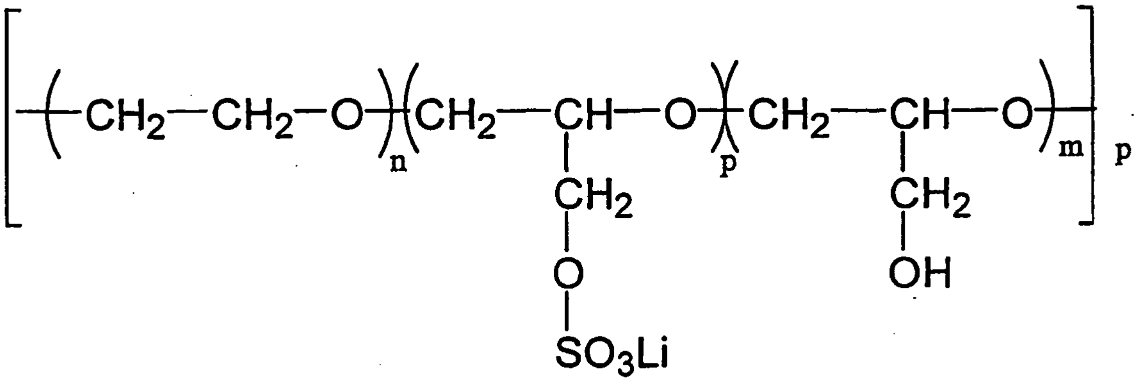

On prépare un terpolymère B en traitant le polymère P1 par de l'hydrure de lithium LiH de manière à transformer 80% de groupes alcools en alcoolate de lithium $-O^-Li^+$, puis on ajoute une quantité stoechiométrique par rapport aux fonctions alcoolates de 2-chloroacétonitrile $ClCH_2CN$.

Terpolymère B

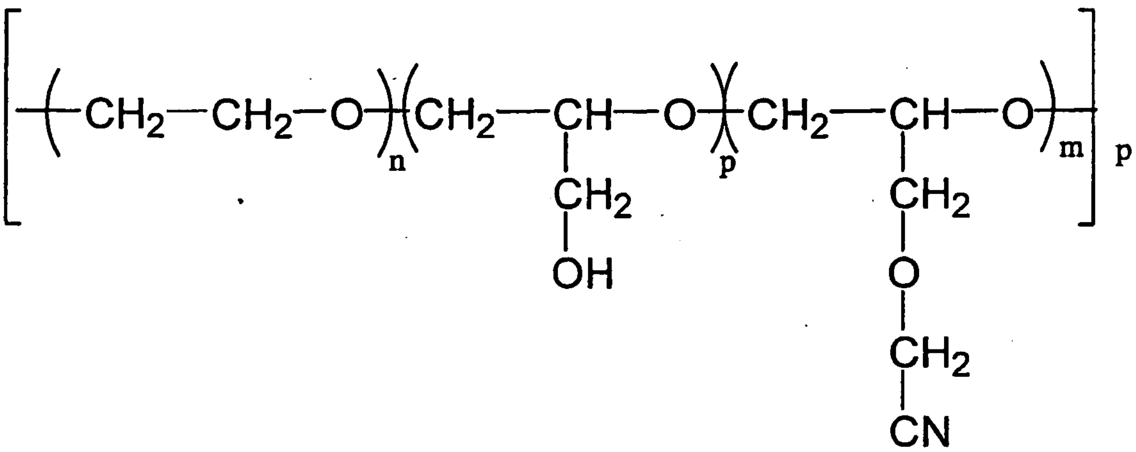

On prépare un terpolymère C en estérifiant une partie des groupes $CH_2OH$ du polymère P1 par un acide cyano-alcanoïque répondant à la formule générale $CN-(CH_2)_n-COOH$.

Terpolymère C

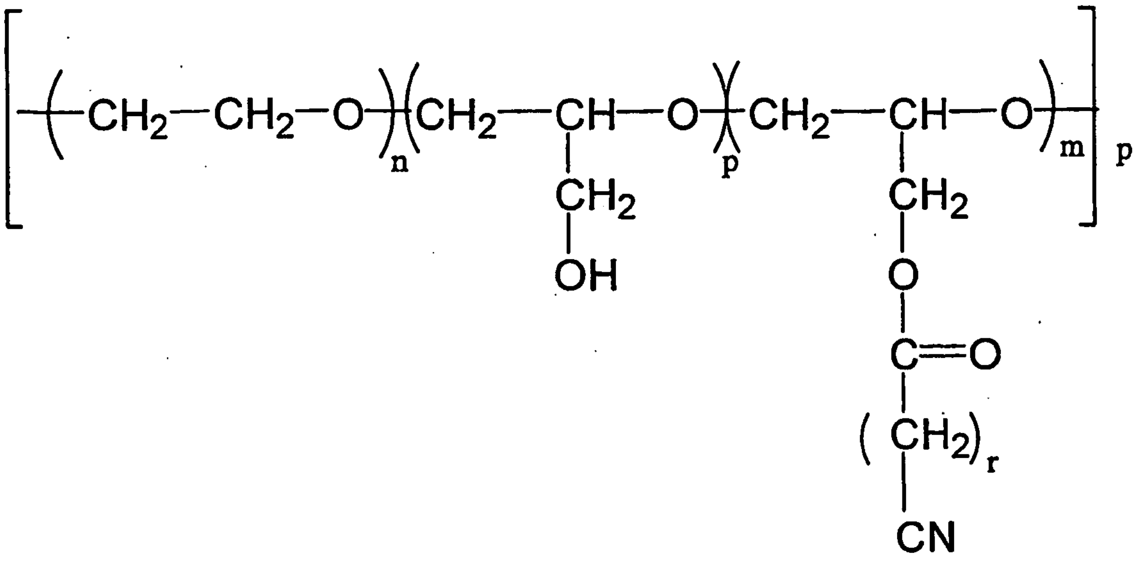

Une co-réticulation peut être obtenue en mélangeant dans le dichlorométhane du terpolymère A et du terpolymère B ou C dans un rapport en poids de 1/1, puis en ajoutant en quantité stoechiométrique de fonctions diisocyanates par rapport aux fonctions OH un diisocyanate HMDI en présence de dilaurate de dibutylétain comme catalyseur. La solution ainsi obtenue est ensuite coulée sur une surface téflonée délimitée par un anneau en verre, le dichlorométhane est évaporé et on laisse la réticulation s'effectuer pendant 48 heures.

Un réseau interpénétré peut être obtenu en réticulant comme précédemment le terpolymère A par une quantité stoechiométrique de fonctions diisocyanate du HMDI en présence du catalyseur. Après réticulation, on gonfle la membrane réticulée par une solution de terpolymère B ou C, de HMDI et de catalyseur dans le dichlorométhane. Après évaporation du solvant, on laisse la membrane réticuler à température ambiante pendant 72 heures.

Un réseau semi-interpénétré peut être obtenu en réticulant comme précédemment le terpolymère A par une quantité stoechiométrique de HMDI en présence du catalyseur. Après réticulation on gonfle la membrane réticulée par une solution du terpolymère B ou C dans le dichlorométhane. Après évaporation du solvant on obtient un réseau semi-interpénétré.

Un copolymère selon l'invention est particulièrement utile pour l'élaboration d'un matériau à conduction ionique.

Un matériau à conduction ionique selon l'invention est constitué par au moins un copolymère selon l'invention, ou par un matériau obtenu par réticulation d'un tel copolymère. Dans un tel matériau, les groupements ioniques $-CH_2-O-SO_3^-Li^+$ confèrent une conduction cationique. La conduction dépend du rapport O/Li, dans lequel 0 représente le nombre d'atomes d'oxygène solvatants et Li représente le nombre d'atomes de Li. Le nombre d'atomes d'oxygène solvatants se définit par rapport au copolymère constituant le matériau à conduction ionique, directement ou après réticulation ; il s'agit du nombre d'atomes d'oxygène fournis par la chaîne constituée par les groupes -O-C-C- apportés par les unités U(R), les unités U(Li) et les éventuelles unités (UR'). Les atomes de Li sont apportés par les unités U(Li). Autrement dit,

$$\frac{O}{Li} = \frac{N(R) + N(Li) + N(R')}{N(Li)}$$

Lorsque le rapport O/Li est inférieur à 40, le matériau présente une conductivité ionique suffisante pour être utilisé comme matériau à conduction ionique, avec ou sans addition d'un sel de lithium classique. Ce résultat est obtenu lorsque la proportion N(Li) d'unité U(Li) est telle que $N(Li) \geq 2,5\%$ par rapport au nombre total d'unités récurrentes dans le copolymère avant une réticulation éventuelle.

Lorsque le rapport O/Li du copolymère est supérieur à 40, c'est-à-dire lorsque $N(Li) < 2,5\%$, il est préférable d'ajouter un sel de lithium pour former le matériau à conduction ionique. Ledit sel de lithium peut être choisi parmi les sels classiquement utilisés dans les matériaux à conduction ionique pour des dispositifs électrochimiques fonctionnant par échange d'ions lithium. A titre d'exemple, on peut citer $(CF_3SO_2)_2NLi$ (LiTFSI), $(CF_3SO_2)_2CHLi$ (LiTFSM), $(CF_3SO_2)_3CLi$ (LiTTFSM), $CF_3SO_3Li$ (TFLi), $LiClO_4$, $LiPF_6$, $LiBF_4$, $LiAsF_6$, LiBOB, LiFSI ou LiI. On peut en outre citer

les composés $(NC-CH_2-CH_2)_2NCO-CF(CF_3)-SO_3Li$ et $(CH_3O-CH_2-CH_2)_2NCO-CF(CF_3)-SO_3Li$, dont la préparation est décrite par (X. Ollivrin, et al., [Electrochimica Acta, 48, 14-16, 1961-69, (2003)]. La quantité de sel de lithium ajoutée est telle que le rapport $O/Li_t$ soit inférieur à 40, $Li_t$ représentant le nombre total d'atomes de Li apportés par les unités U(Li) et par le sel.

Il est noté que, pour un matériau selon l'invention ayant un rapport O/Li donné, la conductivité est améliorée par la présence de groupements R' du type polaire, du fait que les groupements polaires favorisent la dissociation du groupement ionique sulfate de lithium $-O-SO_3^-$, $Li^+$ et le cas échéant la dissociation du sel de lithium ajouté, ce qui augmente la concentration effective en ions $Li^+$. Un effet sur la conductivité peut être obtenu à partir de 5% en moles d'unités U(R') dans lesquelles R' est un groupe polaire.

Lorsqu'un matériau à conduction ionique est un matériau constitué par un copolymère selon l'invention ou un matériau obtenu par réticulation d'un copolymère selon l'invention, sa conductivité peut en outre être améliorée par addition d'un composé ayant un fort pouvoir de complexation vis à vis du cation lithium, tel qu'un éther-couronne ou une polyamine. A titre d'exemple, on peut citer la spartéine et le tétraaza-cyclotétradécane (TMTAC) qui répondent respectivement aux formules

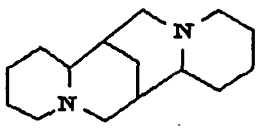

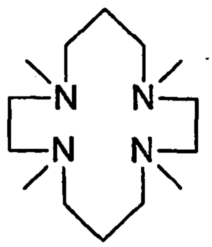

Un matériau à conduction ionique selon l'invention peut contenir en outre un agent plastifiant, choisi par exemple parmi les solvants liquides polaires aprotiques, la quantité de solvant liquide compatible avec une utilisation à une température de 100°C étant inférieure à 30% en poids, de préférence compris entre 5% et 10% en poids par rapport à la masse totale du matériau. A titre d'exemple, on peut citer le carbonate d'éthylène, le carbonate de propylène, la γ-butyrolactone, le diméthylformamide, la N-méthylpyrrolidone, les tétraalkylsulfamides, les éthers diméthyliques de polyéthylène glycol de masse comprise entre 200 et 2000 g/mole et, d'une manière générale, les dérivés de molécules polaires de faible volatilité. L'un des effets des agents plastifiants est de diminuer la viscosité du copolymère, ce qui favorise la mobilité des ions, et par conséquent la conductivité ionique.

Un matériau à conduction ionique constitué par un copolymère réticulé peut aussi être gélifié par un solvant ou un mélange de solvants, choisi par exemple parmi les solvants liquides polaires aprotiques, la quantité de solvant liquide étant inférieure à 85% en poids, de préférence compris entre 70% et 80% en poids par rapport à la masse totale du matériau. A titre d'exemple, on peut citer le carbonate d'éthylène, le carbonate de propylène, les dialkylcarbonates, la γ-butyrolactone, le diméthylformamide, la N-méthylpyrrolidone, les tétraalkylsulfamides, le diméthoxyéthane et le dioxolane.

Un matériau à conduction ionique contenant un copolymère selon l'invention est généralement utilisé sous forme de film lorsqu'il est destiné à former l'électrolyte d'un dispositif électrochimique. Il doit donc présenter une tenue mécanique suffisante. Un copolymère selon l'invention qui a une masse molaire supérieure à 100 000 g/mole répond à ce critère et peut être utilisé tel quel pour constituer le matériau à conduction ionique.

Lorsque l'on utilise, pour élaborer un film de matériau à conduction ionique, un copolymère selon l'invention dont la masse molaire est inférieure à 100 000 g/mole, le matériau à conduction ionique contient de préférence une charge destinée à améliorer la tenue mécanique. Dans ce cas, les proportions respectives des différentes unités récurrentes sont choisies de manière à privilégier le rapport O/Li du polymère en vue de favoriser la conduction ionique. La charge peut être une silice (par exemple la silice grade Batterie commercialisée par la société Degussa), une alumine, un oxyde de titane, ou un renfort cellulosique constitué par des whiskers ou des microfibrilles de cellulose tels que décrits par exemple dans FR-2 841 255.

Lorsque l'on utilise pour élaborer un film de matériau à conduction ionique un copolymère selon l'invention qui possède des unités récurrentes portant des groupes réticulables, ledit copolymère peut être utilisé sous forme réticulée ou non réticulée. Lorsque la masse molaire du copolymère est inférieure à 100 000 g/mole, il est recommandé d'utiliser ledit copolymère sous forme réticulée et/ou de lui ajouter, comme indiqué précédemment, une charge destinée à renforcer la tenue mécanique. Lorsque le matériau à conduction ionique est obtenu par réticulation d'un copolymère ayant un taux de groupes réticulables N(R') entre 2 et 30%, sa tenue mécanique est suffisante et rend facultative l'addition d'une charge.

Un matériau à conduction ionique selon l'invention peut être obtenu sous forme d'un film. Dans un mode de

réalisation, le film est obtenu par coulée / évaporation. Le procédé consiste dans ce cas à préparer une solution des différents constituants du matériau dans un solvant, à dégazer la solution obtenue, puis à la couler sur un substrat, et à laisser le film sécher par évaporation du solvant. Comme solvant, on peut utiliser un solvant volatil tel que par exemple l'acétonitrile, le méthanol, l'acétone, le diméthylformamide ou le dichlorométhane.

Dans un autre mode de réalisation, un mélange à sec des différents constituants du matériau est soumis à une extrusion.

Lorsqu'un matériau contenant un copolymère sous forme réticulée est recherché, la réticulation doit être effectuée après la formation du film.

Un matériau à conduction ionique selon la présente invention peut être utilisé sous forme de film comme électrolyte dans divers dispositifs électrochimiques qui fonctionnent par déplacement d'ions $Li^+$ entre deux électrodes à travers un électrolyte. Le copolymère peut en outre être utilisé comme liant conducteur pour le matériau constituant l'une des électrodes d'un dispositif électrochimique ou les deux électrodes.

Parmi les dispositifs électrochimiques concernés, on peut citer les batteries rechargeables ou non, les systèmes électrochromes, les systèmes de modulation de la lumière et les super condensateurs.

Une batterie selon l'invention comprend une électrode négative et une électrode positive séparées par un électrolyte solide polymère, l'électrolyte comprenant un matériau à conduction ionique selon la présente invention. De préférence, on utilise un matériau réticulé obtenu à partir d'un copolymère selon l'invention qui comprend des unités U (R') dans lesquelles R' est un groupe polaire. L'électrode positive est constituée par une matière active d'électrode positive. Elle peut contenir en outre un copolymère selon la présente invention comme liant conducteur. Elle peut contenir en outre un matériau conférant une conduction électronique. Dans une batterie rechargeable au lithium, l'anode est constituée par un film de lithium métallique, d'un alliage de lithium ou d'un composé intermétallique de lithium. Dans une batterie de type lithium-ion, l'électrode négative est constituée par un matériau capable d'insérer de manière réversible des ions lithium tel que le graphite par exemple.

Un système électrochrome selon l'invention comprend une électrode transparente et une électrode constituée par une matière active dont la couleur varie avec le degré d'oxydation, les deux électrodes étant séparées par un électrolyte conducteur constitué par un matériau à conduction ionique selon la présente invention. L'électrode transparente peut être constituée par exemple par un oxyde d'indium et d'étain (ITO) ou un fluoroxyde d'étain (FTO). L'autre électrode change de couleur lorsque des ions $Li^+$ s'insèrent dans la matière active qui peut être par exemple l'oxyde de tungstène $WO_3$.

Un super condensateur comprend deux électrodes à base de carbone séparées par un électrolyte. Selon la présente invention, l'électrolyte est constitué par un matériau à conduction ionique comprenant un copolymère selon la présente invention sous forme réticulée, plastifié par addition d'un ou plusieurs solvants organiques. L'acétonitrile peut être utilisé par exemple comme solvant plastifiant. L'utilisation dans l'électrolyte d'un copolymère réticulé à fonction sulfate selon la présente invention permet, par addition d'un sel libre, de moduler le transport cationique et de s'affranchir de l'utilisation d'un séparateur qui est nécessaire dans le cas des électrolytes liquides.

Un copolymère selon la présente invention peut en outre être utilisé pour l'élaboration de membranes sélectives ou de membranes de référence dans les capteurs à membrane, par exemple pour doser les ions lithium présents dans une solution. Il est préférable d'utiliser pour l'élaboration de membranes, un matériau selon l'invention dans lequel le rapport O/Li est entre 10 et 30.

Un copolymère statistique selon l'invention désigné ci-après par CP[U(R), U(Li), U(OH)] et constitué par des unités U(R), des unités U(Li) et éventuellement des unités U(R') dans lesquelles le substituant R' est OH, [désignées ci-après par unités U(OH)], peut être obtenu par un procédé comprenant les étapes suivantes :

1. préparation d'un copolymère CP[U(R), U(EP)] constitué par des unités U(R) et des unités U(EP), les unités U (EP) étant des unités $-O-CH_2-CH(-CH_2Cl)-$ ;
2. transformation des groupes $-CH_2Cl$ des unités U(EP) du copolymère CP[U(R), U(EP)] en groupes $-CH_2OH$ ;
3. transformation d'au moins une partie des groupes $-CH_2OH$ en groupes $-CH_2-O-SO_3Li$ .

La préparation du copolymère CP[U(R), U(EP)] est effectuée par copolymérisation d'oxyde d'éthylène ou d'oxyde de propylène et d'épichlorhydrine, selon un procédé décrit notamment par J. Furukawa, S. Akutsu, T. Saegusa, [Macromol. Chem. 81, 100 (1965)], ledit procédé mettant en oeuvre le complexe $FeCl_3$ - oxyde de propylène - d-bornyl-éthyl-éther pour la copolymérisation d'oxyde de propylène et d'épichlorhydrine. Elle est effectuée avantageusement en solution dans le toluène, en présence d'un amorceur de polymérisation du type Vandenberg, choisi par exemple parmi les composés du type trialkylaluminium et le diéthylmalonate.

La transformation des groupes $-CH_2Cl$ peut être effectuée selon un procédé décrit par H.L. COHEN [Journal of Polymer Science : Polymer Chemistry Edition vol. 13, 1993-2000 (1975)]. Ledit procédé consiste à faire réagir le copolymère CP[U(R), U(EP)] avec l'acétate de potassium dans le méthoxy-éthoxyéthanol. Le copolymère est dissous dans le solvant à 100°C sous un balayage d'argon. L'acétate de potassium est ajouté en excès (3 fois par rapport à la

stoechiométrie) dans le mélange qui est porté à 175°C et maintenu à cette température pendant 6 heures. Après retour à la température ambiante, le copolymère est précipité dans l'éther et séché sous vide. Le schéma réactionnel est indiqué ci-après.

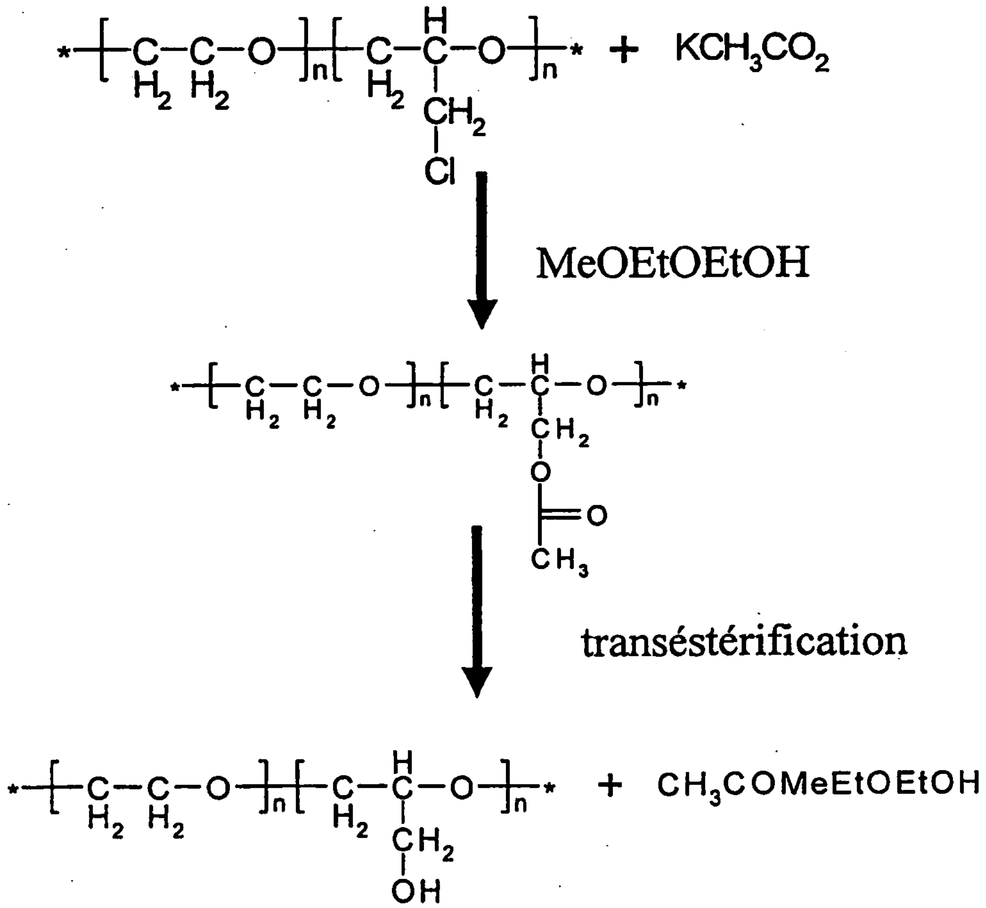


Selon un autre mode de réalisation, un copolymère à blocs selon l'invention, désigné ci-après par CP[U(H), U(Li), U(OH)] et constitué par des unités U(R) dans lesquelles R est H et qui sont désignées par U(H), des unités U(Li) telles que définies précédemment, et éventuellement des unités U(OH) telles que définies précédemment, peut être obtenu par un procédé comprenant les étapes suivantes :

1. préparation d'un poly(oxyde d'éthylène) à extrémités réactives $-O^-M^+$ ;
2. préparation d'un copolymère à bloc poly(oxyde d'éthylène-co-glycidolP), par réaction du poly(oxyde d'éthylène) à extrémités réactives $-O^-M^+$ avec un glycidol protégé (désigné par glycidolP), $M^+$ étant un ion de métal alcalin ;
3. déprotection des substituants latéraux des unités récurrentes provenant du glycidol protégé, pour transformer lesdits substituants latéraux en substituants $-CH_2OH$.
4. transformation d'au moins une partie des groupes $-CH_2OH$ en groupes $-CH_2-O-SO_3Li$ .

La préparation du poly(oxyde d'éthylène) à extrémités réactives $-O^-M^+$ peut être effectuée par réaction d'un poly(oxyde d'éthylène) avec MOH selon le schéma réactionnel suivant .

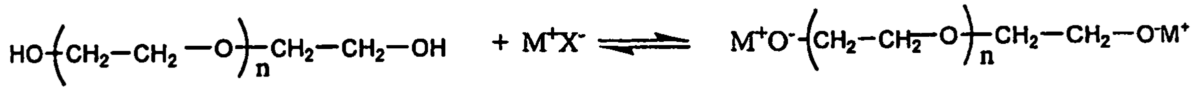

$M^+ = K, Cs, Na$

$X = H, OH, NH_2$

La préparation du copolymère à bloc poly(oxyde d'éthylène-co-glycidolP) peut être effectuée par réaction du poly(oxyde d'éthylène) à extrémités réactives $-O^-M^+$ avec un glycidol protégé, selon le schéma réactionnel suivant :

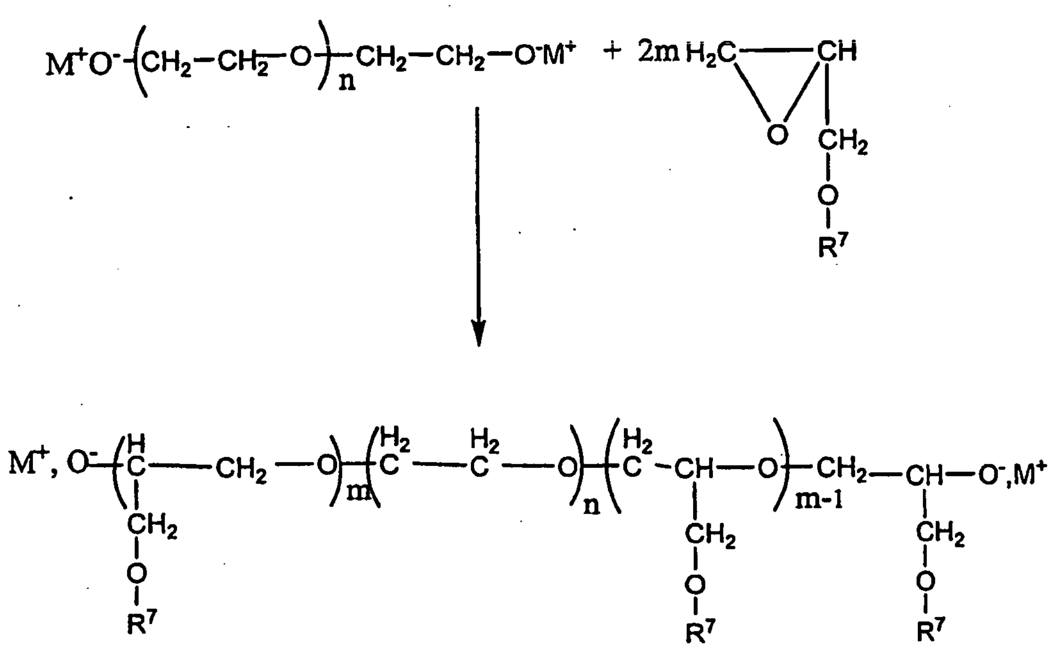

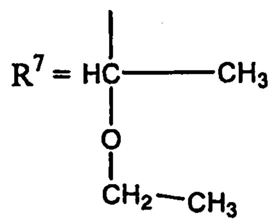

Le glycidol protégé peut être obtenu par exemple en faisant réagir du glycidol avec un éthylvinyléther, en présence d'acide p-toluène sulfonique.

La déprotection des substituants latéraux des unités récurrentes provenant du glycidol protégé peut être effectuée par une succession d'étapes consistant à :

- faire réagir le copolymère poly(oxyde d'éthylène-co-glycidolP) avec l'acide formique pour transformer les groupes terminaux $C_2H_5$-O-CH($CH_3$)-O- des substituants latéraux, ainsi les groupes $-O^-M^+$ des extrémités de la chaîne principale en groupes O=CH-O- ;
- faire réagir le copolymère obtenu avec KOH(2N) pour transformer les groupes terminaux O=CH-O- en groupes $-O^-K^+$ ;
- remplacer l'ion $K^+$ par un $H^+$ sur une résine échangeuse d'ions :

ladite succession d'étapes pouvant être représentée par le schéma réactionnel suivant

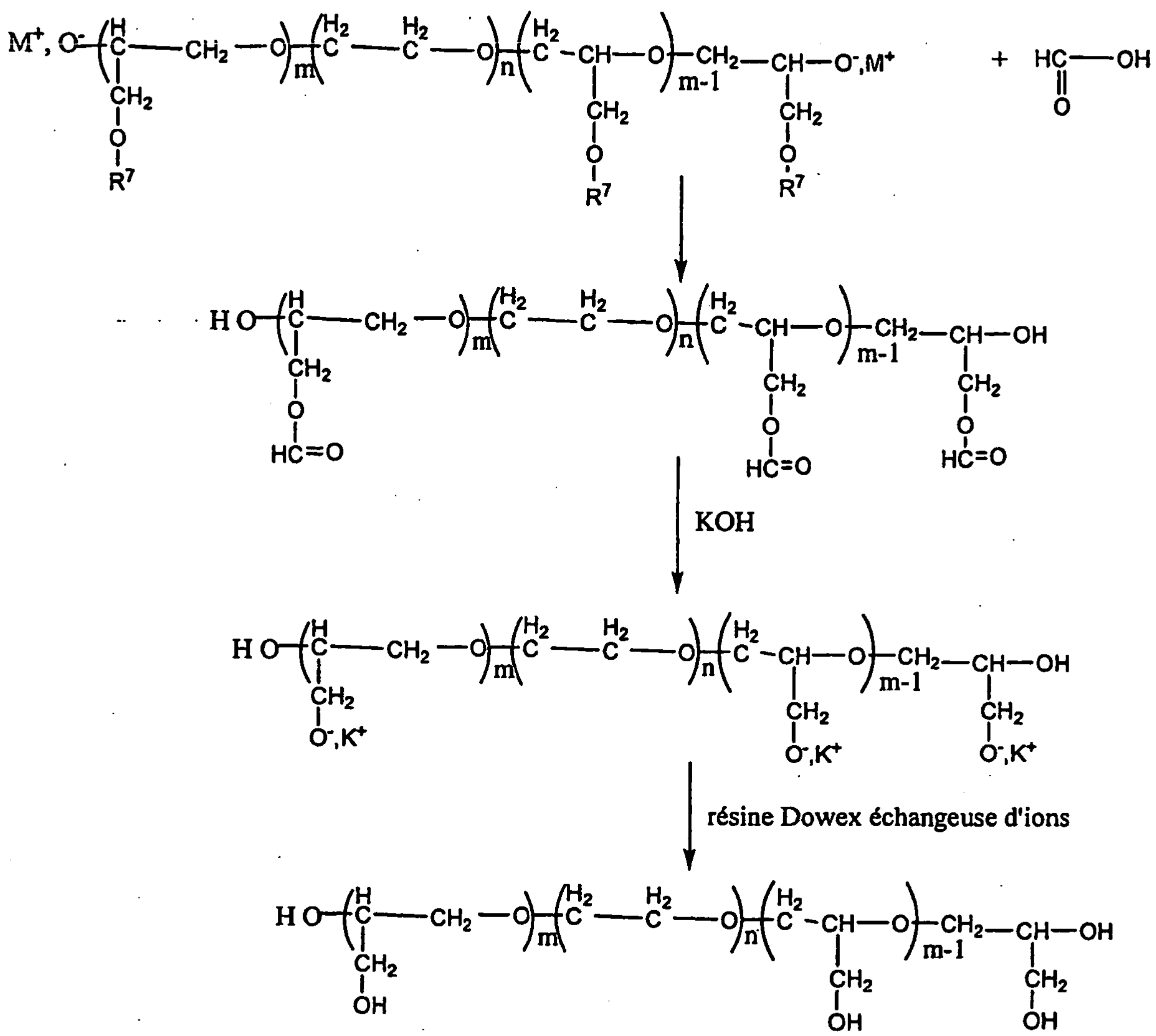


Dans les deux modes de réalisation décrits ci-dessus [préparation d'un copolymère statistique à partir d'oxyde d'éthylène ou de propylène et d'épichlorhydrine, et préparation d'un copolymère à blocs à partir d'un poly(oxyde d'éthylène) et de glycidol], la transformation des groupes $-CH_2OH$ en groupes $-CH_2-O-SO_3Li$ est effectuée en deux étapes. Au cours d'une première étape, on estérifie le groupe OH par addition de chlorosulfonate de triméthylsilyle $(CH_3)_3Si-SO_3Cl$ en milieu anhydre et sous un balayage de gaz neutre. On obtient ainsi le polymère sous forme d'ester-sulfate silylé portant des groupes latéraux $-CH_2-O-SO_3-Si\ (CH_3)_3$. Au cours de la seconde étape, on génère les groupes sulfate de lithium. - $CH_2-O-SO_3-Li$ par traitement des groupes ester silylés par Li-OH.

Pour la 1ère étape, on choisit un solvant insensible ou peu sensible aux acides, par exemple un solvant chloré tel que le dichlorométhane. Il est préférable d'ajouter lentement le chlorosulfonate de triméthylsilyle au copolymère en raison du caractère fortement exothermique de la réaction. On utilise un léger excès de chlorosulfonate de triméthylsilyle pour tenir compte des traces d'eau. Pour la 2ème étape, on utilise de l'eau distillée comme solvant. La neutralisation est effectuée par addition de LiOH (par exemple sous forme d'une solution aqueuse 1M), en contrôlant le dosage acide-base à l'aide d'un pH-mètre. Après neutralisation, l'eau est évaporée et l'on ajoute de l'acétonitrile qui dissout le polymère lithié, et dans lequel les impuretés minérales (LiCl, LiOH, $LiSO_4$) sont insolubles et elles peuvent donc être éliminées par filtration.

Lorsque le copolymère visé contient uniquement des unités U(R) ou U(H) et des unités U(Li), on utilise les réactifs en quantité suffisante pour transformer la totalité des groupes $-CH_2OH$ en groupes $-CH_2-O-SO_3Li$. L'utilisation d'une quantité sous-stoechiométrique de réactif permet de conserver des groupes $-CH_2OH$, qui peuvent rester tels quels dans le copolymère, ou par l'intermédiaire desquels des groupes R' différents peuvent être fixés sur la chaîne principale du copolymère.

Pour obtenir un copolymère dans lequel R' est un groupe époxy ou un groupe vinyléther, on fait réagir un copolymère dans lequel R' est un groupe OH avec LiH en milieu anhydre pour transformer le groupe $-CH_2OH$ en alcoolate

de lithium, puis on fait réagir l'alcoolate ainsi formé respectivement avec l'épichlorhydrine ou avec le chloroéthylvinyl éther pour obtenir un groupe R' final du type époxy ou du type vinyléther. Le schéma réactionnel est le suivant :

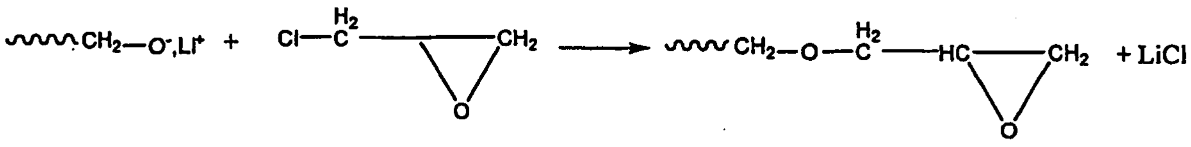

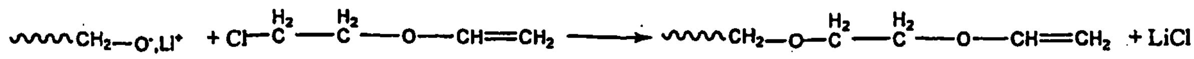

Pour obtenir un copolymère dans lequel R' est un groupe acrylate ou méthacrylate, on fait réagir un copolymère dans lequel R' est un groupe OH avec l'acide acrylique ou l'acide méthacrylique. Dans ce cas on effectue la réaction sous pression réduite pour éliminer l'eau formée et déplacer ainsi l'équilibre d'estérification, en particulier par distillation azéotropique avec le benzène en utilisant un tube de Dean et Stark. Une alternative consiste à utiliser le chlorure ou l'anhydride de l'acide acrylique ou de l'acide méthacrylique, éventuellement en présence de pyridine comme catalyseur de la réaction d'estérification.

Pour obtenir un copolymère dans lequel R' est un groupe styryle, on fait réagir un copolymère dans lequel R' est un groupe OH avec LiH pour transformer le groupe $-CH_2OH$ en alcoolate de lithium, puis on fait réagir avec le chlorométhyl styrène. On peut aussi introduire un groupe styryle en estérifiant le groupe $-CH_2OH$ du polymère par l'acide p-vinylbenzoïque selon le schéma réactionnel suivant :

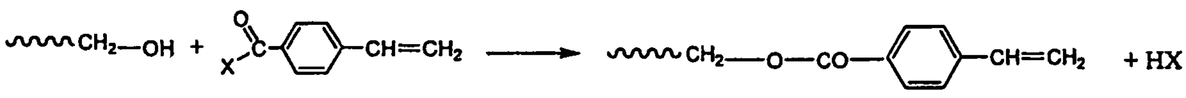

X = OH ou Cl

Un copolymère dans lequel le substituant R' est un groupe nitrile peut être obtenu par transformation d'une unité récurrente dans laquelle R' est OH par réaction avec LiOH, suivie de la réaction de l'alcoolate de lithium formé avec le chloroacétonitrile.

La présente invention est illustrée par les exemples ci-dessous, auxquels elle ne doit cependant pas être limitée.

**Exemple 1**

Préparation d'un copolymère statistique poly(oxyde d'éthylène-stat-glycidol)

Le procédé mis en oeuvre est analogue au procédé décrit par Cohen et al (précité).

Dans un ballon tricol de 500 mL, on a introduit 200 mL de diéthylèneglycol monométhyl éther, puis on a chauffé à 100°C sous balayage d'argon et sous agitation. Ensuite, on a introduit 10 g d'un copolymère poly(oxyde d'éthylène-co-épichlorhydrine) dans lequel le nombre de moles de fonctions chlore est égal à 0,02 et qui peut être représenté par la formule semi-développée (I) suivante :

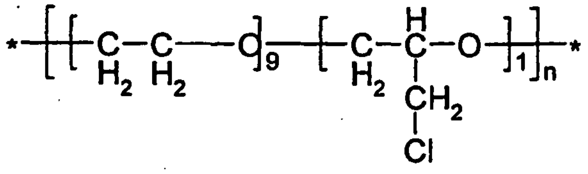

(I)

Après dissolution du copolymère (I), on a ajouté 5,88 g d'acétate de potassium (0,06 mol), on a porté le milieu réactionnel

à 175°C et on a maintenu cette température pendant 6 heures. Ensuite, on a laissé le mélange réactionnel à la température ambiante et on l'a précipité dans l'éther. Le copolymère obtenu a été séparé par filtration et séché sous vide pendant 12 heures à 40°C. Il comprend 90% en nombre d'unités oxyéthylène (correspondant aux unités U(R) de la formule générale, et 10% d'unités U(R') sous forme d'unités U(OH). Il peut être représenté par la formule semi-développée (II) suivante :

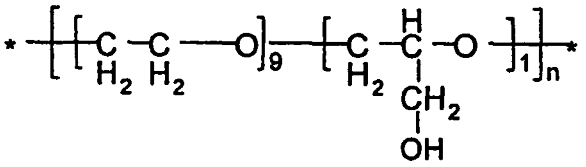

(II)

**Exemple 2**

Préparation d'un copolymère statistique poly(oxyde d'éthylène-stat-glycidylsulfate de lithium

Dans un ballon tricol de 500 mL contenant 250 mL de dichlorométhane et 1,93 g de résine Amberlist 21®, on a introduit 3,63 g de copolymère (II) (correspondant à $7{,}71.10^{-3}$ mol de groupes OH. Le ballon a été placé sur un bain de glace et soumis à un balayage d'argon pendant toute la durée de la synthèse.

On a introduit dans une ampoule à brome, 40 mL de dichlorométhane et 1,25 mL de chlorosulfonate de triméthylsilyle (correspondant à un excès de 5% par rapport à la stoechiométrie), puis on a ajouté la solution goutte à goutte dans le ballon tricol. Le mélange a été laissé sous balayage d'argon pendant 1 heure après la fin de l'addition du chlorosulfonate de triméthylsilyle. Ensuite, le solvant a été éliminés sous vide à l'évaporateur rotatif, le résidu a été repris dans 100 mL d'eau distillée, puis la solution obtenue a été neutralisée par addition d'une solution aqueuse de LiOH à 1 mol/L. L'addition de LiOH a été suivie au pH-mètre et arrêtée dès l'obtention d'un pH supérieur à celui de l'eau distillée.

L'eau a ensuite été éliminée sous vide à l'évaporateur rotatif, le résidu a été repris à l'acétonitrile et la solution obtenue a été centrifugée, puis filtrée deux fois sur un filtre en PVDF ayant une porosité moyenne de 1 μm, puis une fois sur un filtre en PVDF ayant une porosité moyenne de 0,45 μm, et une fois sur un filtre en PVDF ayant une porosité moyenne de 0,22 pm. Le copolymère ainsi obtenu a été précipité dans l'éther, puis séché sous vide dans une cellule Büchi à 40°C, et finalement entreposé en boîte à gant sous argon. Le polymère (III) obtenu comprend 90% en nombre d'unités oxyéthylène (correspondant aux unités U(R) de la formule générale, et 10% d'unités U(Li) et il peut être représenté par la formule semi-développée suivante (III) :

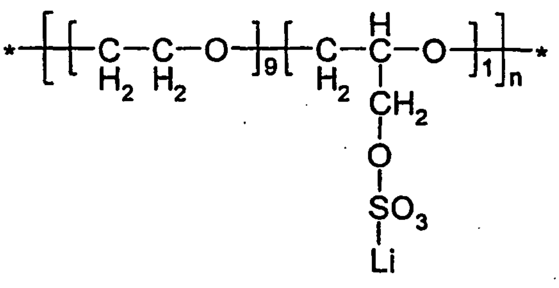

(III)

**Exemple 3**

Préparation de copolymères statistiques poly(oxyde d'éthylène-stat-glycidylsulfate de lithium-stat- glycidol

Le mode opératoire de l'exemple 2 a été reproduit à plusieurs reprises en modifiant les quantités respectives de réactifs, de manière à obtenir la transformation d'une partie seulement des unités éthylène glycol en unités éthylèneglycol sulfaté lithié. Les conditions opératoires particulières et les résultats des différents essais sont rassemblés dans le tableau suivant. $n_{OH}$ représente le nombre de mole OH apportée par le copolymère (II), % U(Li) | représente le

pourcentage d'unités U(Li) par rapport au total des unités autres que les unités oxyéthylène, %U(OH) représente le pourcentage d'unités U(OH) par rapport au total des unités autres que les unités oxyéthylène.

| Copolymère (II) | | Amberlyst 21 | $(CH_3)_3SiSO_3Cl$ | Copolymère final | | |
|---|---|---|---|---|---|---|
| Masse (g) | $n_{OH}$ | Masse (g) | Volume (mL) | % U(Li) | %U(OH) | formule |
| 3,32 | $7,05.10^{-3}$ | 1,76 | 0.92 | 85 | 15 | IV |
| 3,28 | $6,99.10^{-3}$ | 1,75 | 0,57 | 50 | 50 | V |
| 2,32 | $4,92.10^{-3}$ | 1,23 | 0,27 | 33 | 67 | VI |
| 2,62 | $5,56.10^{-3}$ | 1,39 | 0,21 | 25 | 75 | VII |

Les formules semi-développées des différents copolymères obtenus sont données ci-après.

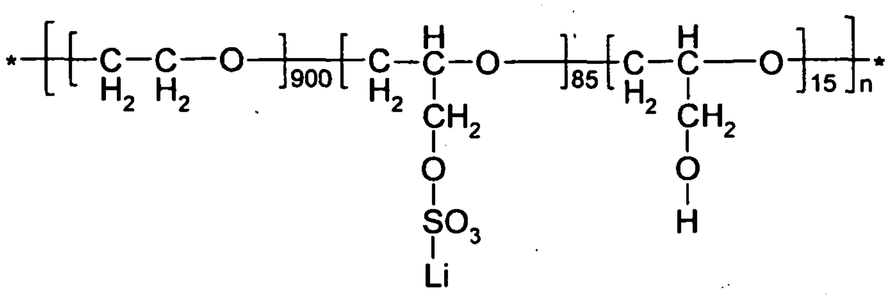

(IV)

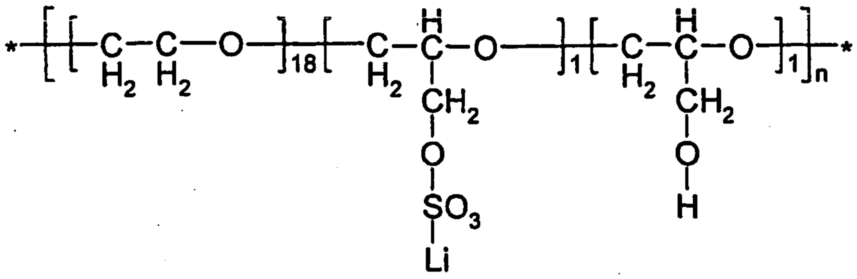

(V)

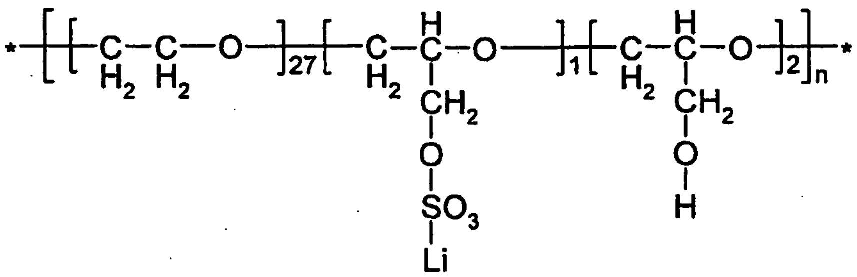

(VI)

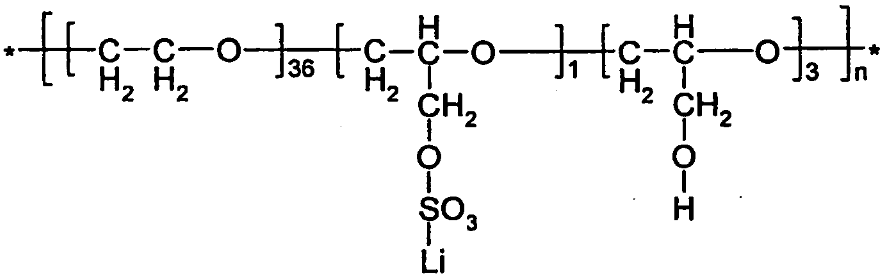

(VII)

**Exemple 4**

Préparation de copolymères statistiques poly(oxyde d'éthylène-stat-glycidylsulfate de lithium-stat-cyanométhyl-glycidyl-éther

Dans un ballon de 250 ml, on a introduit 1 g du copolymère VI (1,35 $10^{-3}$ mol OH), 0,3 g d'hydroxyde de lithium, 5 ml d'eau et 60 ml de dichlorométhane. Le mélange réactionnel a été chauffé à 60 °C pendant 1 heure, puis une distillation azéotropique du dichlorométhane et de l'eau a été effectuée. Après élimination totale de l'eau, le mélange réactionnel a été refroidi à la température ambiante sous atmosphère d'argon. On a alors ajouté 0,1 ml de chloroacétonitrile. Après 30 mn, le mélange réactionnel a été porté à 60°C et maintenu à cette température pendant 24 h. Après refroidissement, la solution obtenue a été centrifugée, puis filtrée deux fois sur un filtre en PVDF de porosité moyenne 1 μm, une fois sur un filtre en PVDF de porosité moyenne 0,45 μm, et une fois sur un filtre en PVDF de porosité moyenne 0,22 μm, avant d'être précipitée dans l'éther diéthylique. Le copolymère précipité a été séché sous vide dans une cellule Büchi à 40°C, et finalement entreposé en boîte à gant sous argon. Le polymère (VII) obtenu comprend 90% en nombre d'unités oxyéthylène (correspondant aux unités U(R) de la formule générale) 3,3% d'unités U(Li) et 6,6% d'unités U(R') dans lesquelles R' est CN. Il peut être représenté par la formule semi-développée suivante:

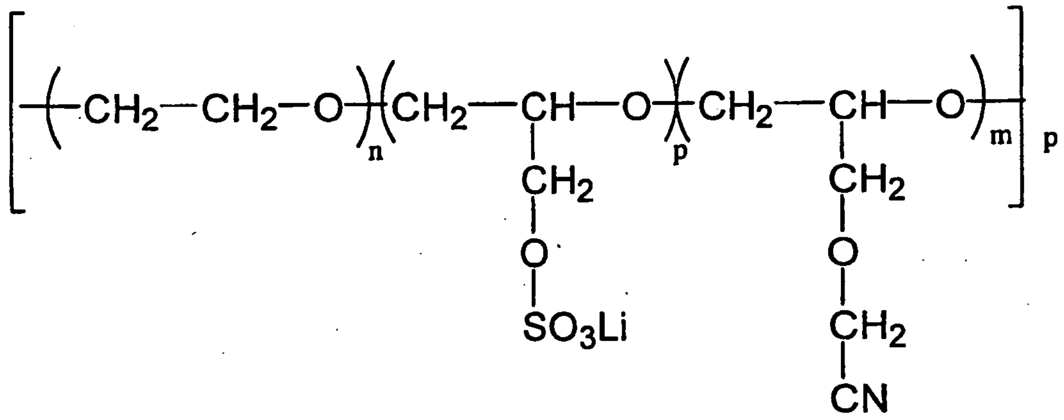

VIII

**Exemple 5**

Préparation de copolymères réticulés

Les copolymères IV, V et VI ont été soumis à une réticulation par réaction des groupes OH avec le 1,6-diisocyanatohexane (HMDI).

En opérant en boîte à gants sous atmosphère d'argon, on a préparé une solution du copolymère dans le dichlorométhane, on a ajouté du dilaurate de dibutylétain comme catalyseur, puis on a coulé la solution sur une surface de verre téflonée délimitée par un anneau en verre téflonné. Après évaporation du dichlorométhane, on a laissé l'ensemble à température ambiante, et la réticulation s'est effectuée spontanément en 48 heures.

Les conditions spécifiques à chaque copolymère sont rassemblées dans le tableau suivant.

| Copolymère initial | | HMDI | Catalyseur | Copolymère réticulé |
|---|---|---|---|---|
| | Masse (g) | Masse (g) | Masse (g) | |
| IV | 0,738 | 0,017 | $6,4\ 10^{-3}$ | IV-R |
| V | 0,6492 | 0,053 | 0,01993 | V-R |
| VI | 0,3735 | 0,0419 | 0,0157 | VI-R |

Le taux d'insolubles des matériaux obtenus par réticulation des copolymères IV à VI a été déterminé et comparé à celui du matériau obtenu par réticulation du copolymère II et du copolymère III. Les copolymères non réticulés sont solubles dans le dichlorométhane. La détermination du taux d'insolubles a été effectuée selon le mode opératoire suivant. Une masse mi du copolymère réticulé sous forme de film a été prélevée et plongée dans le dichlorométhane pendant 12 heures, le film a ensuite été retiré du flacon et placé dans une étuve à 70°C, puis pesé, la masse finale étant désignée par mf. Le taux d'insolubles est mf/mi*100.

La figure 2 représente l'évolution du taux d'insolubles Tx en fonction du pourcentage de fonctions OH réticulées (%OH), qui correspond ici au pourcentage de fonctions réticulables, compte tenu de la quantité de HMDI introduite lors de la réticulation. Il apparaît que le taux d'insolubles du matériau réticulé augmente avec la proportion de fonctions OH réticulables du copolymère non réticulé. Afin de vérifier l'influence de la proportion des fonctions réticulables, on a déterminé le module d'élasticité des matériaux réticulés obtenus à partir des copolymères IV à VI, et on l'a comparé avec le module du copolymère III (non réticulable puisque n'ayant pas de groupe réticulable). La figure 3 représente l'évolution du module d'élasticité à 100°C (Me en Mpa) en fonction du pourcentage de fonctions OH réticulées (%OH). Le module d'élasticité est nul pour le copolymère III non réticulé, et il augmente avec le nombre de fonctions OH réticulées, c'est-à-dire avec le nombre de ponts uréthanne.

**Exemple 6**

<u>Mesure de la conductivité ionique</u>

On a mesuré la conductivité ionique de divers matériaux dans une enceinte thermostatée, de 90°C à 20°C tous les 10°C. Les figures 4 à 7 représentent l'évolution de la conductivité en fonction de la température, pour chacun des matériaux testés. Sur chacune des figures, la conductivité C (exprimée en S/cm) est portée en ordonnée, et la température est portée en abscisse, sous la forme 1000/T, (en $K^{-1}$) .Le tableau suivant indique le matériau testé, le rapport O/Li dudit matériau, la conductivité à différentes températures et le numéro de la figure donnant l'évolution de la conductivité.

| Matériau | % -OH | % $SO_4$Li | O/Li | C à 90°C (S/cm) | C à 60°C (S/cm | figure |
|---|---|---|---|---|---|---|
| III | 0 | 100 | 10 | $1,9.10^{-5}$ | $5.7.10^{-6}$ | 4 ♦ |
| IV | 15 | 85 | 12 | $3,7.10^{-5}$ | $1,4.10^{-5}$ | 5 ▲ |
| IV-R | 15 | 85 | 12 | $1,8.10^{-5}$ | $5,2.10^{-6}$ | 5 ♦ |
| V | 50 | 50 | 20 | $3,9.10^{-5}$ | $1,7.10^{-5}$ | 6 ♦ |
| VI | 67 | 33 | 30 | $9,6.10^{-5}$ | $4,2.10^{-5}$ | 7 ▲ |
| VI-R | 67 | 33 | 30 | $2,8.10^{-5}$ | $9,5.10^{-6}$ | 7 ♦ |

Ces résultats montrent que la diminution du nombre de groupements ioniques dans un copolymère, qui entraînerait une diminution de la conductivité ionique du matériau, toutes choses étant égales par ailleurs, est compensée par la présence des groupements polaires OH qui augmente le pouvoir de solvatation vis à vis de l'anion, ce qui a pour effet de favoriser la dissociation des groupes ioniques et d'augmenter ainsi la conductivité. Ils montrent également que la réticulation d'un copolymère diminue la conductivité ionique d'un facteur non négligeable.

**Exemple 7**

Influence d'un plastifiant sur la conduction ionique

On a déterminé la conduction ionique d'un matériau constitué par un mélange du copolymère III et de polyéthylène glycol diméthyléther de masse molaire 500 (PEG500), dans lequel le PEG500 représente 10% en masse. La conductivité a été comparée à celle du copolymère III pris isolément.

Les résultats sont représentés sur la figure 8 sur laquelle la courbe matérialisée par les triangles concerne le mélange copolymère III+PEG500, et la courbe matérialisée par les losanges concerne le copolymère III. Il apparaît que l'addition du plastifiant améliore la conductivité. Ce résultat provient du fait que l'addition de plastifiant diminue la viscosité du matériau et favorise la mobilité des ions $Li^+$ et par conséquent la conductivité.

**Exemple 8**

Influence d'un complexant sur la conduction ionique

On a déterminé la conduction ionique d'un matériau constitué par un mélange du copolymère III et de spartéine, dans lequel la spartéine représente 29% en masse (rapport 1/1 en mole entre le nombre de fonctions sulfate de lithium et de molécules de spartéine). La conductivité a été comparée à celle du copolymère III utilisé sans complexant.

Les résultats sont représentés sur la figure 9 sur laquelle la courbe matérialisée par les triangles concerne le mélange copolymère III+spartéine, et la courbe matérialisée par les losanges concerne le copolymère III. Il apparaît que l'addition du complexant améliore la conductivité. Ce résultat provient du fait que l'addition de complexant augmente probablement la dissociation du sel et qu'elle diminue aussi probablement la viscosité du matériau Le caractère plastifiant du complexant utilisé favorise la mobilité des ions $Li^+$ et par conséquent la conductivité.

**Exemple 9**

Influence d'un complexant sur la conduction ionique

On a déterminé la conduction ionique d'un matériau constitué par un mélange du copolymère III et de tétraazacyclotétradécane (TMTAC), dans lequel le TMTAC représente 31,5% en masse (rapport 1/1 en mole entre le nombre de fonction sulfate de lithium et de TMTAC). La conductivité a été comparée à celle du copolymère III pris isolément.

Les résultats sont représentés sur la figure 10 sur laquelle la courbe matérialisée par les triangles concerne le mélange copolymère III+TMTAC, et la courbe matérialisée par les losanges concerne le copolymère III. Il apparaît que l'addition du complexant améliore la conductivité. Ce résultat provient du fait que l'addition de complexant augmente probablement la dissociation du sel et qu'elle diminue aussi probablement la viscosité du matériau. Le caractère plastifiant du complexant utilisé favorise la mobilité des ions $Li^+$ et par conséquent la conductivité.

**Exemple 10**

Préparation d'un copolymère poly[(oxyde d'éthylène) - bloc - (glycidol - stat - glycidylsulfate de lithium)]

Préparation d'un glycidol protégé

Dans un ballon tricol de 500 ml muni d'une colonne réfrigérée, on a introduit 66,24 ml (74 g, 1 mol) de glycidol, puis 204 ml (144 g, 2,08 moles) d'éthylvinyl éther (EVE). Sous agitation magnétique, on a introduit 1 g (0,058 mol) d'acide p-toluène sulfonique (aPTS), puis on a chauffé à reflux pendant 2 h 40. Après refroidissement, on a neutralisé la solution par $\simeq$ 215 ml d'une solution aqueuse saturée en hydrogénocarbonate de sodium. La phase organique a été lavée 2 fois à l'eau distillée puis séchée sur sulfate de sodium anhydre. L'EVE restant a été éliminé par distillation (T = 34°C, P =760 mm Hg) et le glycidol protégé (glycidolP) a été purifié par distillation sous vide (T = 50°C, P = 7 mmHg). Seule la fraction de coeur est conservée, les impuretés restant dans le ballon ou la fraction de tête.

Le produit brut a une couleur orange, puis devient translucide après distillation. On a récupéré 140 g de GLP, soit un rendement proche de 96 %.

Préparation d'un macroamorceur

On a préparé un macroamorceur pour la synthèse d'un copolymère, selon le schéma suivant :

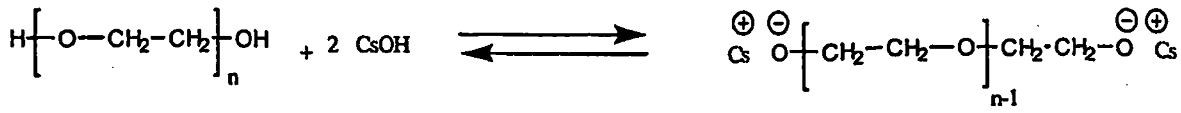

Dans un ballon tricol muni d'une colonne de distillation, on a introduit 100 ml de toluène, 2 g de poly(oxyde d'éthylène) (POE) 4000 ($5.10^{-4}$ moles) et 0,149 g ($10^{-3}$ moles) d'hydroxyde de césium. On a fait réagir à 80°C pendant 3 heures sous agitation magnétique. L'eau formée a été éliminée par distillation azéotropique de toluène.
Des macroamorceurs, de différentes masses molaires comprises entre 400 et 10 000 g/mol, ont été synthétisés. Les valeurs de n correspondantes sont indiquées dans le tableau ci-après.

Synthèse d'un copolymère à blocs

Les macroamorceurs tels que préparés ci-dessus ont été utilisés pour synthétiser des copolymères à blocs poly(oxyde d'éthylène-bloc-polyglycidolP) désignés par B1 à B8 comportant différents nombres n d'unités oxyéthylène et différents nombres m d'unités glycidolP. Les copolymères sont identifiés dans le tableau ci-dessous. "Unité glycidolP" désigne l'unité correspondant à l'ouverture du glycidol protégé.

| copolym. | n | m |
|---|---|---|
| B1 | 8,7 | 15 |
| B2 | 8,7 | 100 |
| B3 | 45 | 100 |
| B4 | 45 | 100 |
| B5 | 90, 5 | 166 |
| B6 | 90,5 | 50 |
| B7 | 90,5 | 100 |
| B8 | 56, 8 | 100 |

Dans un ballon de 250 ml muni d'une colonne de distillation, on a introduit 100 ml de toluène et 7,3 g ($5.10^{-2}$ moles) de GLP, puis on a distillé 30 ml d'azéotrope (Pression atmosphérique; T=110°C), sous agitation magnétique et en protégeant le milieu de l'humidité de l'air par une garde à chlorure de calcium. On a refroidi ensuite sous argon jusqu'à 80°C.
Le macroamorceur précédemment préparé a été ajouté dans la solution précédente. On a porté la température jusqu'à 100°C, puis on a laissé réagir pendant 5 heures sous atmosphère d'argon. Le solvant a ensuite été éliminé par distillation. Un choix approprié du rapport entre la concentration molaire en unités de répétition $CH_2$-$CH_2$-O et la concentration molaire en unités glycidol protégé permet d'obtenir le copolymère tribloc souhaité. Par exemple pour obtenir un copolymère tribloc n = 45, m = 100 on utilise un poly(oxyde d'éthylène) diol de masse 2000 en concentration 0,01 mol/l, soit une concentration en unité $CH_2$-$CH_2$-O égale à 0,45 mol/l, et une concentration en glycidol protégé de 2 mol/l.
La couleur et la viscosité des polymères obtenus varient en fonction du macroamorceur utilisé.
La caractérisation des copolymères par RMN $H^1$ et $C^{13}$ a permis de suivre l'avancement de la réaction, en observant la diminution, puis la disparition du pic correspondant au cycle époxy du monomère ($H^1$... $C^{13}$ 60,63 ppm, 50,63 ppm).
Les produits de réaction ont également été analysés par Chromatographie par perméation de gel (GPC) dans le THF à 25°C en utilisant un jeu de colonnes d'ultrastyragel. L'analyse GPC du produit brut montre que le produit de réaction peut présenter une ou 2 distributions. L'obtention de deux distributions provient de réactions parasites de transfert de chaîne lors de la polymérisation. Une partie du copolymère obtenu précipite dans l'heptane, tandis que l'autre se solubilise. Par caractérisation RMN $^1H$, les deux fractions séparées dans l'heptane ont pu être analysées. La fraction soluble correspond à un homopolymère PGLP polyglycidolP et le produit insoluble correspond au copolymère triblocs attendu PGLP-POE-PGLP. L'homopolymère et le copolymère étant compatibles, le mélange peut être utilisé tel quel pour préparer un électrolyte pour une batterie au lithium, pour un système électrochrome ou pour un supercondensateur, sans que les performances de l'électrolyte en soient affectées.

Transformation des groupes "glycidol protégé" en groupes $-CH_2OH$

Dans un ballon contenant 15 g de copolymère B1, on a introduit 100 ml d'acide formique. On a laissé l'acide agir sur B1 pendant 20 minutes à 20°C. L'excès d'acide a ensuite été évaporé sous vide (Tamb, P = 4.5 mm Hg). 120 ml de THF et 70 ml de méthanol ont été ajoutés avant d'amener le pH de la solution à 12 par addition de KOH 2M. L'addition de KOH a été suivie au pH-mètre et arrêtée dès l'obtention d'un pH égal à 12.

Les solvants ont ensuite été éliminés sous vide (Tamb, P = 4 - 5 mm Hg). Une solution aqueuse du polymère a été passée sur une colonne échangeuse d'ions ($H^+$) (résine cationique régénérée à l'acide chlorhydrique 2M). L'eau a ensuite été éliminée sous vide à l'évaporateur rotatif, le polymère déprotégé, et PGL ou PGL-POE-PGL a été séché sous vide (Tamb, P = 4 - 5 mm Hg).

Remplacement d'une partie des groupes OH par des groupes sulfonate de lithium

Dans un ballon tricol de 500 mL contenant 100 mL de diméthylsulfoxide, on a introduit 10 g de copolymère (B7) (correspondant à $7{,}71.10^{-3}$ mol de groupes OH). Le ballon a ensuite été ensuite placé sur un bain de glace et soumis à un balayage d'argon pendant toute la durée de la synthèse. On introduit dans une ampoule à brome, 80 mL de diméthylsulfoxide et 16,25 mL de chlorosulfonate de triméthylsilyle (correspondant à un excès de 5% par rapport à la stoechiométrie), puis on a ajouté la solution goutte à goutte dans le ballon tricol. Le mélange a ensuite été laissé sous balayage d'argon pendant 1 heure après la fin de l'addition du chlorosulfonate de triméthylsilyle. Ensuite, le solvant a été éliminé sous vide à l'évaporateur rotatif, le résidu a été repris dans 100 mL d'eau distillée, puis la solution obtenue a été neutralisée par addition d'une solution aqueuse de LiOH à 1 mol/L. L'addition de LiOH a été suivie au pH-mètre et arrêtée dès l'obtention d'un pH supérieur à 7.

L'eau a ensuite été éliminée sous vide à l'évaporateur rotatif, le résidu a été repris à l'acétonitrile et la solution obtenue a été centrifugée, puis filtrée deux fois sur un filtre en PVDF ayant une microporosité de 1 $\mu$m, puis une fois sur un filtre en PVDF ayant une microporosité de 0,45 $\mu$m, et une fois sur un filtre en PVDF ayant une microporosité de 0,22 $\mu$m. Le copolymère ainsi obtenu est précipité dans l'éther, puis séché sous vide dans une cellule Büchi à 40°C, et finalement entreposé en boîte à gant sous argon.

**Exemple 11**

Préparation d'un copolymère statistique poly(oxy de d'éthylène-stat-glycidolsulfate de lithium-stat-cyanométhylglycidyléther)

Dans un ballon de 250 ml, on a introduit 1 g du copolymère obtenu à la fin de l'exemple 10, 5 ml (0,01 mol) d'hydroxyde de potassium et 50 ml de toluène. Une distillation azéotropique du toluène a été effectuée sous pression réduite (T = 50°, P = 30 - 35 mmHg). Après l'élimination totale du toluène, on a ajouté 40 mL de THF, préalablement séché sur sodium, on a mis la solution sous atmosphère d'argon et on l'a chauffée jusqu'à 55°C. On a introduit alors 0,63 ml (0,01 mol) de chloro acétonitrile avant de porter le mélange réactionnel au reflux, à T=60°C. Le solvant, a ensuite été éliminé sous vide à l'évaporateur rotatif. Le copolymère obtenu peut être représenté par la formule VIII donnée précédemment.

**Exemple 12**

Synthèse de copolymères statistiques poly(oxyde d'éthylène - stat - glycidol)

Au cours d'une première étape, on a préparé un copolymère statistique poly[(oxyde d'éthylène) - stat - glycidolP].

La polymérisation est effectuée dans un réacteur autoclave en acier inoxydable supportant une pression de 100 bars. L'agitation mécanique est assurée par l'intermédiaire d'un palier magnétique, le chauffage par une calotte chauffante adaptée. Le réacteur est thermostaté par un circuit de refroidissement à l'eau contrôlé par une électrovanne. Les réactifs sont introduits par l'intermédiaire de sas en acier inoxydable, préalablement remplis en boîte à gants sous argon. Le THF, solvant de la réaction est préalablement distillé sur hydrure de calcium, $CaH_2$. Il est utilisé non seulement comme solvant de réaction mais aussi pour rincer, avant usage, le réacteur et les sas. La réaction est réalisée sous argon, la pression du réacteur variant entre 2 et 10 bars au cours de la réaction.

On a utilisé un dialcoolate de césium préparé à partir de poly(oxyde d'éthylène) diol de masse 400. 0,53 g de macroamorceur, soit $7{,} 9.10^{-4}$ moles ont été d'abord introduits dans 150 ml de THF dans le sas. On a rajouté successivement 60 g (1,36 moles) d'oxyde d'éthylène et 58 de glycidol protégé (0,4 moles). Après 12 heures de réaction à 100°C on laisse revenir à température ambiante et on désactive la réaction par addition de 5 ml d'eau.

L'analyse par GPC du copolymère SP1 obtenu, qui comprend des unités oxyéthylène et des unités glycidol

protégé, montre que la masse molaire moyenne en masse $M_w$, calculée en équivalent polystyrène est de l'ordre de 20000 g/mol.

L'analyse RMN-$C^{13}$ et RMN-$H^1$ montre la présence de pics spécifiques de motifs oxyéthylène (70, 5 ppm $C^{13}$, $(\underline{C}H_2\text{-}\underline{C}H_2\text{-}O)$ 3, 54 ppm , $(C\underline{H}_2\text{-}C\underline{H}_2\text{-}O)$ $H^1$) et de motifs glycidol protégé (99,5 ppm (O-$\underline{C}$H-O), 19, 51 ppm ($\underline{C}H_3$-CH<), 15,04 ppm ($\underline{C}H_3\text{-}CH_2$-) $C^{13}$ et 4,6 ppm (O-C$\underline{H}$-O), 1,2 ppm ($C\underline{H}_3$-CH<) 1, 1 ppm ($C\underline{H}_3\text{-}CH_2$-) $H^1$) dans un rapport 2,6.

Au cours d'une deuxième étape, on a transformé les groupes "glycidol protégé" du polymère SP1 en groupes $-CH_2OH$.

Dans un ballon contenant 15 g de copolymère SP1, on introduit 100 ml d'acide formique. On laisse l'acide agir sur SP1 pendant 20 minutes à 20°C. L'excès d'acide est ensuite évaporé sous vide (Tamb, P = 4,5 mm Hg). 120 ml de THF et 70 ml de méthanol sont ajoutés avant d'amener le pH de la solution à 12 par addition de KOH 2M. L'addition de KOH a été suivie au pH-mètre et arrêtée dès l'obtention d'un pH égal à 12.

Les solvants sont ensuite éliminés sous vide (Tamb, P = 4 - 5 mm Hg). Une solution aqueuse du polymère est traitée avec une résine échangeuse de protons ($H^+$) (résine cationique préalablement régénérée à l'acide chlorhydrique 2M). L'eau est ensuite éliminée sous vide à l'évaporateur rotatif, le copolymère déprotégé, S1, est séché sous vide (Tamb, P = 4 - 5 mm Hg).

## Revendications

1. Copolymère **caractérisé en ce que** sa chaîne comprend :

   - des unités récurrentes U(R) répondant à la formule - $O\text{-}CH_2\text{-}CHR$- dans laquelle R est H ou $CH_3$ ;
   - des unités récurrentes U(Li) répondant à la formule $-O\text{-}CH_2\text{-}CH\ (-CH_2\text{-}O\text{-}SO_3^-Li^+)$- ;
   - éventuellement des unités récurrentes U(R') répondant à la formule $-O\text{-}CH_2\text{-}CH(-CH_2R')$- dans laquelle R' est un groupe fonctionnel.

2. Copolymère selon la revendication 1, **caractérisé en ce que** $70 \leq N(R) \leq 95$, 2, $5 \leq N(Li) \leq 15$, et $0 \leq N(R') \leq 20$.

3. Copolymère selon la revendication 1, **caractérisé en ce que** les différentes unités récurrentes sont réparties de manière statistique.

4. Copolymère selon la revendication 1, **caractérisé en ce qu'**il comprend un ou plusieurs segments constitués d'unités U(R), un ou plusieurs segments constitués d'unités U(Li) et éventuellement un ou plusieurs segments constitués d'unités U(R').

5. Copolymère selon la revendication 1 **caractérisé en ce que** tous les substituants R' représentent le même groupe fonctionnel.

6. Copolymère selon la revendication 1, **caractérisé en ce que** les substituants R' des unités U(R') ne représentent pas tous le même groupe fonctionnel.

7. Copolymère selon la revendication 1, **caractérisé en ce qu'**un groupe fonctionnel R' est choisi parmi les groupes permettant une réticulation du copolymère.

8. Copolymère selon la revendication 1, **caractérisé en ce qu'**un groupe fonctionnel R' est choisi parmi les groupements polaires.

9. Copolymère selon la revendication 7, **caractérisé en ce que** R' est choisi parmi OH, le groupe époxy, le groupe allyléther $CH_2\text{=}CH\text{-}CH_2\text{-}O$-, le groupe méthallyléther $CH_2\text{=}C(CH_3)\text{-}CH_2\text{-}O$-,les groupes du type vinyléther $R^1CH\text{=}CR^2\text{-}O$- ou $R^1CH\text{=}CR^2\text{-}O\text{-}CH_2\text{-}CH_2\text{-}O$- dans lesquels $R^1$ et $R^2$ représentent indépendamment l'un de l'autre H, un alkyle, un alkényle ou un aryle, le groupe acrylate $CH_2\text{=}CH\text{-}C(O)\text{-}O$-, le groupe méthacrylate $CH_2\text{=}C(CH_3)\text{-}C(O)\text{-}O$-, le groupe styrényle $CH_2\text{=}CH(Ph)\text{-}CH_2$-, le groupe vinyl benzoate $CH_2\text{=}CH\ (Ph)C(O)\text{-}O$-, le groupe cinnamate (Ph)-CH=CH-C(O)-O-, ou un groupe $-O\text{-}CO\text{-}NH\text{-}R^3\text{-}Si(OR^4)_3$ dans lequel $R^4$ est un radical alkyle ayant de 1 à 3 atomes de carbone et $R^3$ est un groupe alkylène.

10. Copolymère selon la revendication 8, **caractérisé en ce que** R' est choisi parmi -CN, -OH, les groupes carbonate cyclique, les groupes sulfolane, les groupes sulfoxyde, les groupes sulfone, et les groupes sulfonamide.

**11.** Procédé de préparation d'un copolymère selon la revendication 3, constitué par des unités U(R), des unités U(Li) et éventuellement des unités U(OH), R' étant OH, **caractérisé en ce qu'**il comprend les étapes suivantes :

a. préparation d'un copolymère constitué par des unités U(R) et des unités U(EP), les unités U(EP) étant des unités $-O-CH_2-CH(-CH_2Cl)-$ ;
b. transformation des groupes $-CH_2Cl$ des unités U(EP) en groupes $-CH_2OH$ ;
c. transformation d'au moins une partie des groupes $-CH_2OH$ en groupes $-CH_2-O-SO_3Li$.

**12.** Procédé de préparation d'un copolymère selon la revendication 4, constitué par des unités U(H), R étant H, des unités U(Li), et éventuellement des unités U(OH), **caractérisé en ce qu'**il comprend les étapes suivantes :

a. préparation d'un poly(oxyde d'éthylène) à extrémités réactives $-O^-M^+$, $M^+$ étant un ion de métal alcalin ;
c. préparation d'un copolymère à bloc poly(oxyde d'éthylène-co-glycidolP), par réaction du poly(oxyde d'éthylène) à extrémités réactives $-O^-M^+$ avec un glycidol protégé ;
c. déprotection des substituants latéraux des unités récurrentes provenant du glycidol protégé, pour transformer lesdits substituants latéraux en substituants $-CH_2OH$.
d. transformation d'au moins une partie des groupes $-CH_2OH$ en groupes $-CH_2-O-SO_3Li$ .

**13.** Procédé selon l'une des revendication 11 ou 12, **caractérisé en ce que** la transformation des groupes $-CH_2OH$ en groupes $-CH_2-O-SO_3Li$ est effectuée en deux étapes :

- au cours d'une première étape, on estérifie le groupe OH par addition de chlorosulfonate de triméthylsilyle $(CH_3)_3Si-SO_3Cl$ en milieu anhydre et sous un balayage de gaz neutre, pour obtenir un polymère sous forme d'ester silylé portant des groupes latéraux $-CH_2-O-SO_3-Si(CH_3)_3$ ;
- au cours de la seconde étape, on traite les groupes ester silylés par Li-OH pour obtenir les groupes $-CH_2-O-SO_3-Li$ .

**14.** Procédé selon l'une des revendications 11 ou 12, **caractérisé en ce que** l'on utilise une quantité suffisante de réactif pour transformer la totalité des groupes $-CH_2OH$ en groupes $-CH_2-O-SO_3Li$, de manière à obtenir un copolymère sans unités U(OH).

**15.** Procédé selon l'une des revendication 11 ou 12, **caractérisé en ce que** l'on utilise les réactifs en quantité sous-stoechiométrique, pour la transformation des groupes $-CH_2OH$ en groupes $-CH_2-O-SO_3Li$, de manière à obtenir un copolymère comprenant des unités U(OH).

**16.** Procédé de préparation selon la revendication 15, pour la préparation d'un copolymère dans lequel R' est un groupe époxy ou un groupe vinyléther, **caractérisé en ce qu'**on fait réagir le copolymère comprenant des unités récurrentes U(OH) avec LiH en milieu anhydre pour transformer le groupe $-CH_2OH$ en alcoolate de lithium, puis on fait réagir l'alcoolate ainsi formé respectivement avec l'épichlorhydrine ou avec le chloroéthylvinyl éther pour obtenir un groupe R' final du type époxy ou du type vinyléther.

**17.** Procédé de préparation selon la revendication 15, pour la préparation d'un copolymère dans lequel R' est un groupe acrylate ou méthacrylate, **caractérisé en ce qu'**on fait réagir le copolymère comprenant des unités récurrentes U (OH) soit l'acide acrylique ou l'acide méthacrylique, soit avec le chlorure ou l'anhydride de l'acide acrylique ou de l'acide méthacrylique, éventuellement en présence de pyridine comme catalyseur de la réaction d'estérification.

**18.** Procédé de préparation selon la revendication 15, pour la préparation d'un copolymère dans lequel R' est un groupe styryle, **caractérisé en ce que** l'on fait réagir un copolymère comprenant des unités récurrentes U(OH) soit avec LiH pour transformer le groupe $-CH_2OH$ en alcoolate de lithium, puis avec le chlorométhyl styrène, soit avec l'acide p-vinylbenzoïque.

**19.** Procédé de préparation selon la revendication 15, pour la préparation d'un copolymère dans lequel R' est un groupe nitrile, **caractérisé en ce que** l'on fait réagir un copolymère comprenant des unités récurrentes U(OH) avec LiOH, puis avec le chloroacétonitrile.

**20.** Matériau réticulé, obtenu par réticulation d'un copolymère selon la revendication 7.

**21.** Matériau réticulé selon la revendication 20, constitué par des chaînes principales constituées par des unités récur-

rentes $-O-CH_2-CHR-$ dans lesquelles R est H ou $CH_3$, des unités récurrentes $-O-CH_2-CH(-CH_2-O-SO_3^-M^+)-$ dans lesquelles M représente un métal alcalin, éventuellement des unités récurrentes $-O-CH_2-CH(R')-$ dans lesquelles R' est un groupe polaire, et des unités récurrentes $-O-CH_2-CH(-X-)-$dans lesquelles -X- est un groupe de liaison entre les chaînes principales.

**22.** Matériau réticulé selon la revendication 21, **caractérisé en ce** le chaînon de liaison est un pont uréthane -CO-NH-~~~-NH-CO-.

**23.** Procédé de préparation d'un matériau réticulé selon la revendication 22, **caractérisé en ce qu'**il consiste à effectuer une condensation d'un copolymère selon la revendication 1 comprenant des unités U(OH), avec un diisocyanate

O=C=N~~~-N=C=O.

**24.** Procédé selon la revendication 23, **caractérisé en ce que** le diisocyanate est choisi dans le groupe constitué par les alkylène diisocyanate, le toluène 2,4-diisocyanate, le toluène 2,6-diisocyanate, les oligooxyalkylène $\alpha,\omega$-diisocyanate et les PTHF diisocyanate.

**25.** Matériau réticulé selon la revendication 21, **caractérisé en ce que** le groupe de liaison X répond à la formule $[[-O-C(=O)-NH-CH_2-CH_2-CH_2-SiO_{3/2}]_n$.

**26.** Procédé de préparation d'un matériau réticulé selon la revendication 25, **caractérisé en ce qu'**il consiste à faire réagir avec le 3-isocyanatopropyl triéthoxysilane les groupes OH d'un copolymère selon la revendication 1 comprenant des unités U(OH), puis à effectuer une hydrolyse acido-catalysée des groupes éthoxy apportés par le silane.

**27.** Matériau réticulé selon la revendication 21, **caractérisé en ce** le groupe de liaison X est un réseau de silice.

**28.** Procédé de préparation d'un matériau réticulé selon la revendication 27, **caractérisé en ce qu'**il consiste à faire réagir avec le 3-isocyanatopropyl triéthoxysilane les groupes OH d'un copolymère selon la revendication 1 comprenant des unités U(OH), puis à effectuer une hydrolyse - condensation des fonctions OEt.

**29.** Matériau réticulé selon la revendication 21, **caractérisé en ce que** le groupe de liaison X est l'un des segments A ou B

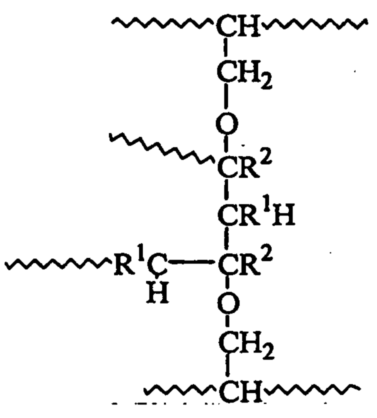

(A)

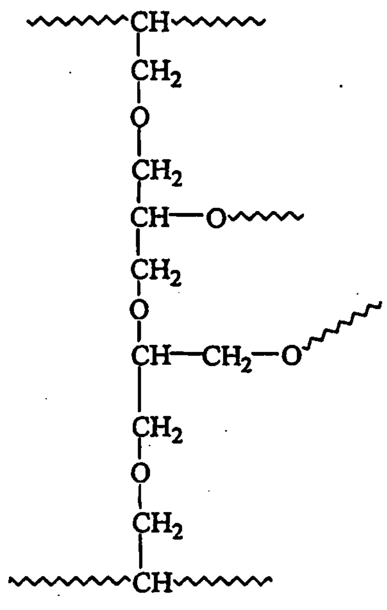

(B)

**30.** Procédé de préparation d'un matériau réticulé selon la revendication 29, **caractérisé en ce qu'**il consiste à effectuer une réticulation par voie cationique sous UV en présence d'un photo-amorceur, d'un copolymère selon la revendication 1 dans lequel R' est un groupe vinyléther pour obtenir le groupe de liaison A et R' est un groupe époxyéther

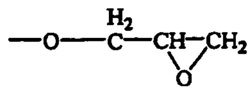

pour obtenir un groupe de liaison B.

**31.** Matériau réticulé selon la revendication 21, répondant à la formule :

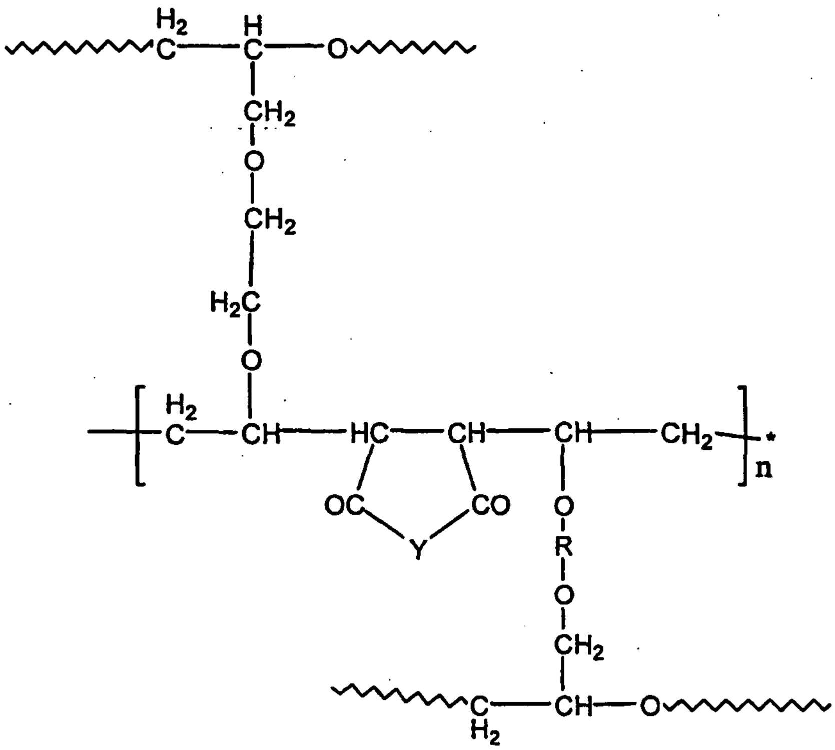

dans laquelle Y représente respectivement O ou $NR^5$, $R^5$ représente H, un alkyle, un aryle, un oligosiloxane, un N-alkylmaléimide, N-arylmaléimide, N-oligosilylmaléimide, et n représente le nombre d'unités récurrentes.

**32.** Procédé de préparation d'un matériau réticulé selon la revendication 31, **caractérisé en ce qu'**il consiste à effectuer une réticulation sous UV en présence d'un photo-amorceur, d'un copolymère selon la revendication 1 dans lequel R' est un groupe vinyléther, la réticulation étant effectuée en présence d'un maléimide, d'un anhydride maléique, ou d'un bismaléimide qui répond à l'un des formules

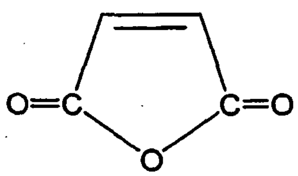

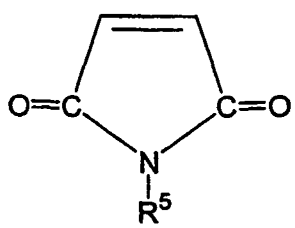

ou en présence d'un mélange d'un maléimide et d'un bismaléimide.

**33.** Matériau réticulé selon la revendication 21, **caractérisé en ce** le groupe de liaison X est représenté par la formule

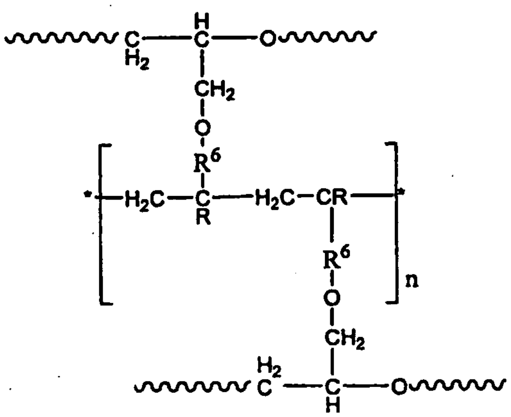

$R^6$ = 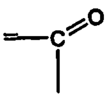 ou 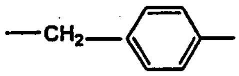 ou 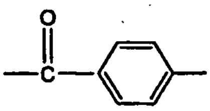

**34.** Procédé pour la préparation d'un matériau réticulé selon la revendication 33, **caractérisé en ce qu'**il consiste à soumettre à une réticulation par voie radicalaire thermique ou sous irradiation UV, un copolymère selon la revendication 1 dans lequel R' représente un groupe acrylate, méthacrylate, cinnamate ou styrényle.

**35.** Matériau à conduction ionique constitué essentiellement par un copolymère selon la revendication 1, ou par un matériau réticulé selon la revendication 20.

**36.** Matériau à conduction ionique selon la revendication 35, dans lequel le rapport O/Li du copolymère ou du matériau réticulé est inférieur à 40.

**37.** Matériau à conduction ionique selon la revendication 35, **caractérisé en ce qu'**il contient un sel de lithium, choisi parmi $(CF_3SO_2)_2NLi$ (LiTFSI), $(CF_3SO_2)_2CHLi$ (LiTFSM), $(CF_3SO_2)_3CLi$ (LiTTFSM), $CF_3SO_3Li$ (TFLi), $LiClO_4$, $LiPF_6$, $LiBF_4$, $LiAsF_6$, LiBOB, LiFSI, $(NC\text{-}CH_2\text{-}CH_2)_2NCO\text{-}CF(CF_3)\text{-}SO_3Li$ et $(CH_3O\text{-}CH_2\text{-}CH_2)_2NCO\text{-}CF(CF_3)\text{-}SO_3Li$.

**38.** Matériau à conduction ionique selon la revendication 35, **caractérisé en que** le copolymère ou le matériau réticulé portent des substituants R' polaires.

**39.** Matériau à conduction ionique selon la revendication 35, **caractérisé en ce qu'**il contient un plastifiant choisi parmi les liquides solvants polaires aprotiqués.

**40.** Dispositif électrochimique comprenant un électrolyte entre deux électrodes, **caractérisé en ce que** l'électrolyte est un matériau à conduction ionique selon la revendication 35.

**41.** Membrane sélective constituée par un film d'un copolymère selon la revendication 1, dans lequel le rapport O/Li est entre 10 et 30.

**42.** Membrane de référence pour capteur à membranes, constituée par un film d'un copolymère selon la revendication 1, dans lequel le rapport O/Li est entre 10 et 30.

## Claims

**1.** Copolymer **characterized in that** its chain comprises:

- repeat units U(R) of formula: $-O-CH_2-CHR-$ in which R is H or $CH_3$;
- repeat units U(Li) of formula: $-O-CH_2-CH(-CH_2-O-SO_3^-Li^+)-$;

- optionally, repeat units U(R') of formula: $-O-CH_2-CH(-CH_2R')-$ in which R' is a functional group.

2. Copolymer according to Claim 1, **characterized in that** $70 \leq N(R) \leq 95$, $2.5 \leq N(Li) \leq 15$ and $0 \leq N(R') \leq 20$.

3. Copolymer according to Claim 1, **characterized in that** the various repeat units are distributed randomly.

4. Copolymer according to Claim 1, **characterized in that** it comprises one or more segments consisting of U(R) units, one or more segments consisting of U(Li) units and optionally one or more segments consisting of U(R') units.

5. Copolymer according to Claim 1, **characterized in that** all the substituents R' represent the same functional group.

6. Copolymer according to Claim 1, **characterized in that** the substituents R' of the U(R') units do not all represent the same functional group.

7. Copolymer according to Claim 1, **characterized in that** a functional group R' is chosen from groups allowing the copolymer to be crosslinked.

8. Copolymer according to Claim 1, **characterized in that** a functional group R' is chosen from polar groups.

9. Copolymer according to Claim 7, **characterized in that** R' is chosen from: OH; the epoxy group; the allyl ether group $CH_2=CH-CH_2-O-$; the methallyl ether group $CH_2=C(CH_3)-CH_2-O-$; groups of the vinyl ether $R^1CH=CR^2-O-$ or $R^1CH=CR^2-O-CH_2-CH_2-O-$ type in which $R^1$ and $R^2$ represent, independently of each other, H, an alkyl, an alkenyl or an aryl; the acrylate group $CH_2=CH-C(O)-O-$; the methacrylate group $CH_2=C(CH_3)-C(O)-O-$; the styrenyl group $CH_2=CH(Ph)-CH_2-$; the vinyl benzoate group $CH_2=CH(Ph)C(O)-O-$; the cinnamate group (Ph)-CH=CH-C(O)-O-; and an $-O-CO-NH-R^3-Si(OR^4)_3$ group in which $R^4$ is an alkyl radical having 1 to 3 carbon atoms and $R^3$ is an alkylene group.

10. Copolymer according to Claim 8, **characterized in that** R' is chosen from -CN, -OH, cyclic carbonate groups, sulfolane groups, sulfoxide groups, sulfone groups and sulfonamide groups.

11. Method of preparing a copolymer according to Claim 3, consisting of U(R) units, U(Li) units and optionally U(OH) units, R' being OH, **characterized in that** it comprises the following steps:

a. preparation of a copolymer consisting of U(R) units and U(EP) units, the U(EP) units being $-O-CH_2-CH(-CH_2Cl)-$ units;
b. conversion of the $-CH_2Cl$ groups of the U(EP) units to $-CH_2OH$ groups; and
c. conversion of at least some of the $-CH_2OH$ groups into $-CH_2-O-SO_3Li$ groups.

12. Method of preparing a copolymer according to Claim 4, consisting of U(H) units, R being H, U(Li) units and optionally U(OH) units, **characterized in that** it comprises the following steps:

a. preparation of a poly(ethylene oxide) having $-O^-M^+$ reactive end groups, $M^+$ being an alkali metal ion;
b. preparation of a poly(ethylene oxide-co-Pglycidol) block copolymer by reacting the poly(ethylene oxide) having $-O^-M^+$ reactive end groups with a protected glycidol;
c. deprotection of the lateral substituents of the repeat units coming from the protected glycidol, in order to convert said lateral substituents into $-CH_2OH$ substituents; and
d. conversion of at least some of the $-CH_2OH$ groups into $-CH_2-O-SO_3Li$ groups.

13. Method according to either of Claims 11 and 12, **characterized in that** the conversion of the $-CH_2OH$ groups into $-CH_2-O-SO_3Li$ groups is carried out in two steps:

- during a first step, the OH group is esterified by addition of trimethylsilyl chlorosulfonate $(CH_3)_3Si-SO_3Cl$ in anhydrous medium and under a stream of inert gas, in order to obtain a polymer in a form of a silylated ester bearing - $CH_2-O-SO_3-Si(CH_3)_3$ side groups;
- during the second step, the silylated ester groups are treated with LiOH in order to obtain the $-CH_2-O-SO_3-Li$ groups.

14. Method according to either of Claims 11 and 12, **characterized in that** sufficient amount of reactant is used to

convert all of the $-CH_2OH$ groups into $-CH_2-O-SO_3Li$ groups, so as to obtain a copolymer containing no U(OH) units.

**15.** Method according to either of Claims 11 and 12, **characterized in that** the reactants are used in substoichiometric amount, for the conversion of the- $CH_2OH$ groups into $-CH_2-O-SO_3Li$ groups, so as to obtain a copolymer comprising U(OH) units.

**16.** Method of preparation according to Claim 15, for preparing a copolymer in which R' is an epoxy group or a vinyl ether group, **characterized in that** the copolymer comprising U(OH) repeat units is reacted with LiH in anhydrous medium in order to convert the $-CH_2OH$ group into a lithium alcoolate, then in reacting the alcoolate thus formed respectively with epichlorohydrin or with chloroethyl vinyl ether in order to obtain a final group R' of the epoxy type or of the vinyl ether type.

**17.** Method of preparation according to Claim 15, for preparing a copolymer in which R' is an acrylate or methacrylate group, **characterized in that** the copolymer comprising U(OH) repeat units is reacted either with acrylic acid or methacrylic acid, or with the chloride or anhydride of acrylic acid or methacrylic acid, optionally in the presence of pyridine as catalyst for the esterification reaction.

**18.** Method of preparation according to Claim 15, for preparing a copolymer in which R' is a styryl group, **characterized in that** a copolymer comprising U(OH) repeat units is reacted either with LiH, to convert the $-CH_2OH$ group into a lithium alcoolate and then with chloromethylstyrene, or with *p*-vinylbenzoic acid.

**19.** Method of preparation according to Claim 15, for preparing a copolymer in which R' is a nitrile group, **characterized in that** a copolymer comprising U(OH) repeat units is reacted with LiOH and then with chloroacetonitrile.

**20.** Crosslinked material obtained by crosslinking a copolymer according to Claim 7.

**21.** Crosslinked material according to Claim 20, consisting of main chains consisting of $-O-CH_2-CHR-$ repeat units in which R is H or $CH_3$, $-O-CH_2-CH(-CH_2-O-SO_3^-M^+)-$ repeat units in which M represents an alkali metal, optionally $-O-CH_2-CH(R')-$ repeat units in which R' is a polar group and $-O-CH_2-CH(-X-)-$ repeat units in which -X- is a linking group between the main chains.

**22.** Crosslinked material according to Claim 21, **characterized in that** the chain link is a urethane bridge -CO-NH-~~~~-NH-CO-.

**23.** Method of preparing a crosslinked material according to Claim 22, **characterized in that** it consists in carrying out a condensation reaction between a copolymer according to Claim 1 comprising U(OH) units and a diisocyanate O=C=N~~~~-N=C=O.

**24.** Method according to Claim 23, **characterized in that** the diisocyanate is chosen from the group consisting of alkylene diisocyanates, toluene-2,4-diisocyanate, toluene-2,6-diisocynate, oligooxyalkylene-$\alpha,\omega$-diisocyanate and PTHF diisocyanates.

**25.** Crosslinked material according to Claim 21, **characterized in that** the linking group X satisfies the formula: $[[-O-C(=O)-NH-CH_2-CH_2-CH_2-SiO_{3/2}]_n$.

**26.** Method of preparing a crosslinked material according to Claim 25, **characterized in that** it consists in reacting the OH groups of a copolymer according to Claim 1 comprising U(OH) units with 3-isocyanatopropyltriethoxysilane and then in carrying out an acid-catalyzed hydrolysis of the ethoxy groups provided by the silane.

**27.** Crosslinked material according to Claim 21, **characterized in that** the linking group X is a silica network.

**28.** Method of preparing a crosslinked material according to Claim 27, **characterized in that** it consists in reacting the OH groups of a copolymer according to Claim 1 comprising U(OH) units with 3-isocyanatopropyltriethoxysilane and then in carrying out a condensation-hydrolysis of the OEt functions.

**29.** Crosslinked material according to Claim 21, **characterized in that** the linking group X is either of the segments A and B:

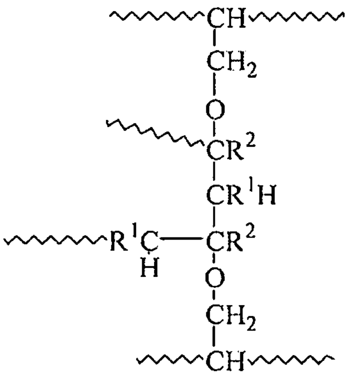
(A)
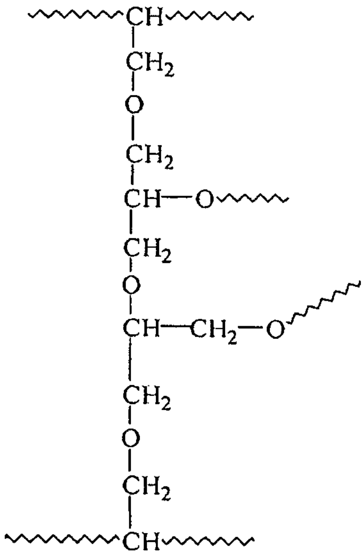
(B)

**30.** Method of preparing a crosslinked material according to Claim 29, **characterized in that** it consists in cationically crosslinking, under UV and in the presence of a photoinitiator, a copolymer according to Claim 1 in which R' is a vinyl ether group in order to obtain linking group A, and R' is an epoxy ether group

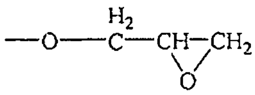

in order to obtain a linking group B.

**31.** Crosslinked material according to Claim 21, satisfying the formula:

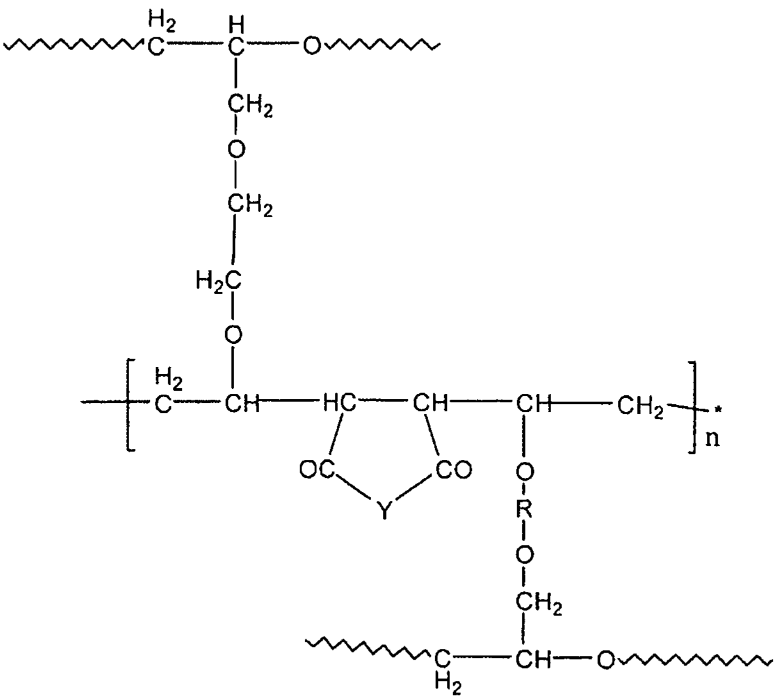

in which Y represents respectively O or $NR^5$, $R^5$ represents H, an alkyl, an aryl, an oligosiloxane or an N-alkylmaleimide, N-arylmaleimide or N-oligosilylmaleimide, and n represents the number of repeat units.

**32.** Method of preparing a crosslinked material according to Claim 31, **characterized in that** it consists in crosslinking, under UV and in the presence of a photoinitiator, a copolymer according to Claim 1 in which R' is a vinyl ether group, the crosslinking being carried out in the presence of a maleimide, a maleic anhydride or a bismaleimide satisfying one of the formulae:

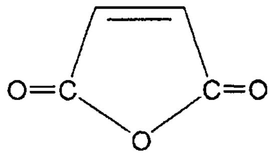

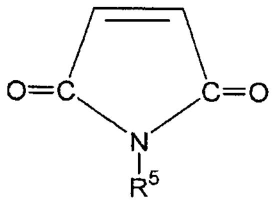

or in the presence of a mixture of a maleimide and a bismaleimide.

**33.** Crosslinked material according to Claim 21, **characterized in that** the linking group X is represented by the formula:

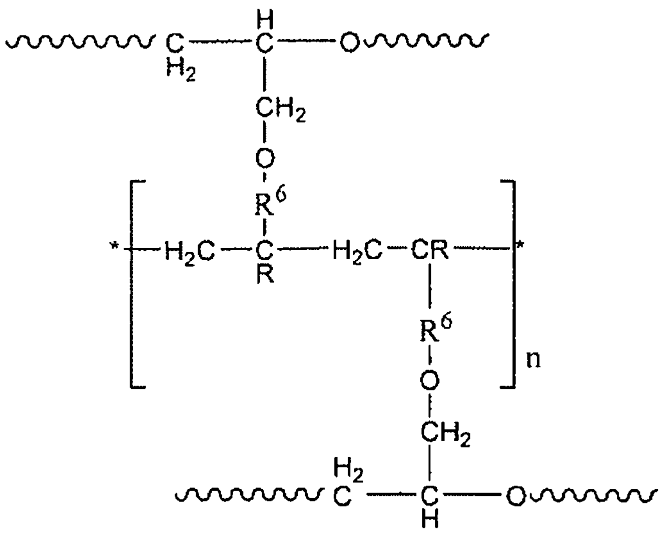

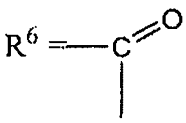

or

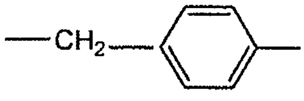

or

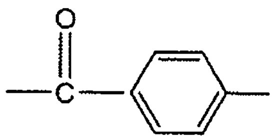

**34.** Method for the preparation of a crosslinked material according to Claim 33, **characterized in that** it consists in subjecting a copolymer according to Claim 1 in which R' represents an acrylate, methacrylate, cinnamate or styrenyl group to UV-irradiation or thermal radical crosslinking.

**35.** Ionically conducting material essentially consisting of a copolymer according to Claim 1 or of a crosslinked material according to Claim 20.

**36.** Ionically conducting material according to Claim 35, in which the O/Li ratio of the copolymer or the crosslinked material is less than 40.

**37.** Ionically conducting material according to Claim 35, **characterized in that** it contains a lithium salt chosen from $(CF_3SO_2)_2NLi$ (LiTFSI), $(CF_3SO_2)_2CHLi$ (LiTFSM), $(CF_3SO_2)_3CLi$ (LiTTFSM), $CF_3SO_3Li$ (TFLi), $LiClO_4$, $LiPF_6$, $LiBF_4$, $LiAsF_6$, LiBOB, LiFSI, LiI, $(NC\text{-}CH_2\text{-}CH_2)_2NCO\text{-}CF(CF_3)\text{-}SO_3Li$ and $(CH_3O\text{-}CH_2\text{-}CH_2)_2NCO\text{-}CF(CF_3)\text{-}SO_3Li$.

**38.** Ionically conducting material according to Claim 35, **characterized in that** the copolymer or the crosslinked material bear polar substituents R'.

**39.** Ionically conducting material according to Claim 35, **characterized in that** it contains a plasticizer chosen from liquid aprotic polar solvents.

**40.** Electrochemical device comprising an electrolyte between two electrodes, **characterized in that** the electrolyte is an ionically conducting material according to Claim 35.

**41.** Selective membrane consisting of a film of a copolymer according to Claim 1, in which the O/Li ratio is between 10 and 30.

**42.** Reference membrane for a membrane sensor, consisting of a film of a copolymer according to Claim 1 in which the O/Li ratio is between 10 and 30.

## Patentansprüche

**1.** Copolymer, **dadurch gekennzeichnet, dass** seine Kette Folgendes umfasst:

- Grundeinheiten U(R) der Formel $-O-CH_2-CHR-$, worin R = H oder $CH_3$ ist;
- Grundeinheiten U(Li) der Formel $-O-CH_2-CH(-CH_2-O-SO_3^-Li^+)-$;
- gegebenenfalls Grundeinheiten U(R') der Formel $-O-CH_2-CH(-CH_2R')-$, worin R' eine funktionelle Gruppe ist.

**2.** Copolymer nach Anspruch 1, **dadurch gekennzeichnet, dass** Folgendes gilt: $70 \leq N(R) \leq 95$, $2{,}5 \leq N(Li) \leq 15$ und $0 \leq N(R') \leq 20$.

**3.** Copolymer nach Anspruch 1, **dadurch gekennzeichnet, dass** die verschiedenen Grundeinheiten statistisch verteilt sind.

**4.** Copolymer nach Anspruch 1, **dadurch gekennzeichnet, dass** es ein oder mehrere aus U(R)-Einheiten aufgebaute Segmente, ein oder mehrere aus U(Li)-Einheiten aufgebaute Segmente und ein oder mehrere aus U(R')-Einheiten aufgebaute Segmente umfasst.

**5.** Copolymer nach Anspruch 1, **dadurch gekennzeichnet, dass** alle Substituenten R' für dieselbe funktionelle Gruppe stehen.

**6.** Copolymer nach Anspruch 1, **dadurch gekennzeichnet, dass** die Substituenten R' der Einheiten U(R') nicht alle für dieselbe funktionelle Gruppe stehen.

**7.** Copolymer nach Anspruch 1, **dadurch gekennzeichnet, dass** eine funktionelle Gruppe R' aus Gruppen ausgewählt ist, die eine Vernetzung des Copolymers ermöglichen.

**8.** Copolymer nach Anspruch 1, **dadurch gekennzeichnet, dass** eine funktionelle Gruppe R' aus polaren Gruppierungen ausgewählt ist.

**9.** Copolymer nach Anspruch 7, **dadurch gekennzeichnet, dass** R' ausgewählt ist aus: OH, der Epoxygruppe, der Allylethergruppe $CH_2=CH-CH_2-O-$, der Methallylethergruppe $CH_2=C(CH_3)-CH_2-O-$, Gruppen vom Vinylethertyp $R^1CH=CR^2-O-$ oder $R^1CH=CR^2-O-CH_2-CH_2-O-$, worin $R^1$ und $R^2$ unabhängig voneinander für H, ein Alkyl, ein Alkenyl oder ein Aryl stehen, der Acrylatgruppe $CH_2=CH-C(O)-O-$, der Methacrylatgruppe $CH_2=C(CH_3)-C(O)-O-$, der Styrylgruppe $CH_2=CH(Ph)-CH_2-$, der Vinylbenzoatgruppe $CH_2=CH(Ph)C(O)-O-$, der Cinnamatgruppe $(Ph)-CH=CH-C(O)-O-$ oder einer Gruppe $-O-CO-NH-R^3-Si(OR^4)_3$, worin $R^4$ ein Alkylrest mit 1 bis 3 Kohlenstoffatomen ist und $R^3$ eine Alkylengruppe ist.

**10.** Copolymer nach Anspruch 8, **dadurch gekennzeichnet, dass** R' aus -CN, -OH, zyklischen Carbonatgruppen, Sulfolangruppen, Sulfoxidgruppen, Sulfongruppen und Sulfonamidgruppen ausgewählt ist.

**11.** Verfahren zur Herstellung eines Copolymers nach Anspruch 3, das aus U(R)-Einheiten, U(Li)-Einheiten und gegebenenfalls U(OH)-Einheiten, in denen R' = OH ist, besteht, **dadurch gekennzeichnet, dass** es folgende Schritte umfasst:

a. Herstellung eines Copolymers, das aus U(R)-Einheiten und U(EP)-Einheiten besteht, wobei die U(EP)-Einheiten Einheiten der Formel $-O-CH_2-CH(-CH_2Cl)$-sind;
b. Überführen der $-CH_2Cl$-Gruppen der U(EP)-Einheiten in $-CH_2OH$-Gruppen;
c. Überführen zumindest eines Teils der $-CH_2OH$-Gruppen in $-CH_2-O-SO_3Li$-Gruppen.

**12.** Verfahren zur Herstellung eines Copolymers nach Anspruch 4, das aus U(H)-Einheiten, worin R = H ist, U(Li)-Einheiten und gegebenenfalls U(OH)-Einheiten besteht, **dadurch gekennzeichnet, dass** es folgende Schritte umfasst:

a. Herstellung eines Poly(ethylenoxids) mit reaktiven $-O^-M^+$-Enden, worin $M^+$ ein Alkalimetallion ist;
b. Herstellung eines Poly(ethylenoxid-co-glycidol-P)-Blockcopolymers durch Reaktion von Poly(ethylenoxid) mit reaktiven $-O^-M^+$-Enden mit einem geschützten Glycidol;
c. Entschützen der Seitenkettensubstituenten der Grundeinheiten, die vom geschützten Glycidol herrühren, um die seitenständigen Substituenten in $-CH_2OH$-Substituenten überzuführen;
d. Überführen zumindest eines Teils der $-CH_2OH$-Gruppen in $-CH_2-O-SO_3Li$-Gruppen.

**13.** Verfahren nach einem der Ansprüche 11 oder 12, **dadurch gekennzeichnet, dass** die Überführung der $-CH_2OH$-Gruppen in $-CH_2-O-SO_3Li$-Gruppen in zwei Schritten erfolgt:

- eine im Verlauf eines ersten Schritts erfolgende Veresterung der OH-Gruppen durch Zugabe von Trimethylsilylchlorsulfonat $(CH_3)_3Si-SO_3Cl$ in wasserfreiem Medium und unter Neutralgasstrom, um ein Polymer in Form eines Silylesters mit seitenständigen Gruppen $-CH_2-O-SO_3-Si(CH_3)_3$ zu erhalten;
- eine im Verlauf des zweiten Schritts erfolgende Behandlung der Silylestergruppen mit Li-OH, um $-CH_2-O-SO_3Li$-Gruppen zu erhalten.

**14.** Verfahren nach einem der Ansprüche 11 oder 12, **dadurch gekennzeichnet, dass** eine ausreichende Reagensmenge eingesetzt wird, um alle $-CH_2OH$-Gruppen so in $-CH_2-O-SO_3Li$-Gruppen umzusetzen, dass ein Copolymer ohne U(OH)-Einheiten erhalten wird.

**15.** Verfahren nach einem der Ansprüche 11 oder 12, **dadurch gekennzeichnet, dass** die Reagenzien in unterstöchiometrischer Menge eingesetzt werden, um die $-CH_2OH$-Gruppen so zu $-CH_2-O-SO_3Li$-Gruppen umzusetzen, dass ein Copolymer mit U(OH)-Einheiten erhalten wird.

**16.** Herstellungsverfahren nach Anspruch 15 zur Herstellung eines Copolymers, in dem R' eine Epoxygruppe oder eine Vinylethergruppe ist, **dadurch gekennzeichnet, dass** das Copolymer, das U(OH)-Grundeinheiten umfasst, mit LiH in einem wasserfreien Medium umgesetzt wird, um die $-CH_2OH$-Gruppe in ein Lithiumalkoholat überzuführen, wonach das auf diese Weise gebildete Alkoholat mit Epichlorhydrin oder Chlorethylvinylether umgesetzt wird, um letztendlich eine R'-Gruppe vom Epoxy- oder Vinylethertyp zu erhalten.

**17.** Herstellungsverfahren nach Anspruch 15 zur Herstellung eines Copolymers, in dem R' eine Acrylat- oder eine Methacrylatgruppe ist, **dadurch gekennzeichnet, dass** das Copolymer, das U(OH)-Grundeinheiten umfasst, entweder mit Acrylsäure oder Methacrylsäure oder mit Acrylsäure- oder Methacrylsäurechlorid oder -anhydrid, gegebenenfalls in Gegenwart von Pyridin als Katalysator für die Veresterungsreaktion, umgesetzt wird.

**18.** Herstellungsverfahren nach Anspruch 15 zur Herstellung eines Copolymers, in dem R' eine Styrylgruppe ist, **dadurch gekennzeichnet, dass** ein Copolymer, das U(OH)-Grundeinheiten umfasst, entweder mit LiH, um die $-CH_2OH$-Gruppe in Lithiumalkoholat überzuführen, und dann mit Chlormethylstyrol oder mit p-Vinylbenzoesäure umgesetzt wird.

**19.** Herstellungsverfahren nach Anspruch 15 zur Herstellung eines Copolymers, in dem R' eine Nitrilgruppe ist, **dadurch gekennzeichnet, dass** ein Copolymer, das U(OH)-Grundeinheiten umfasst, mit LiOH und dann mit Chloracetonitril umgesetzt wird.

**20.** Vernetztes Material, das durch Vernetzen eines Copolymers nach Anspruch 7 erhalten wird.

**21.** Vernetztes Material nach Anspruch 20, das aus Hauptketten besteht, die aus Grundeinheiten $-O-CH_2-CHR-$, worin R = H oder $CH_3$ ist, Grundeinheiten $-O-CH_2-CH(-CH_2-O-SO_3^-M^+)-$, worin M für ein Alkalimetall steht, gegebenenfalls Grundeinheiten $-O-CH_2-CH(R')-$, worin R' eine polare Gruppe ist, und Grundeinheiten $-O-CH_2-CH(-X-)-$, worin -X- eine Linkergruppe zwischen den Hauptketten ist, besteht.

**22.** Vernetztes Material nach Anspruch 21, **dadurch gekennzeichnet, dass** das Linker-Kettenglied eine Urethanbrücke -CO-NH-∼∼∼-NH-CO- ist.

**23.** Verfahren zur Herstellung eines vernetzten Materials nach Anspruch 22, **dadurch gekennzeichnet, dass** es darin besteht, eine Kondensation eines Copolymers nach Anspruch 1, das U(OH)-Einheiten umfasst mit einem Diisocyanat O=C=N∼∼∼-N=C=O durchzuführen.

**24.** Verfahren nach Anspruch 23, **dadurch gekennzeichnet, dass** das Diisocyanat aus der aus Alkylendiisocyanat, Toluol-2,4-diisocyanat, Toluol-2,6-diisocyanat, Oligo-oxyalkylen-$\alpha,\omega$-diisocyanat und PTHF-Diisocyanat bestehenden Gruppe ausgewählt ist.

**25.** Vernetztes Material nach Anspruch 21, **dadurch gekennzeichnet, dass** die Linkergruppe X der Formel $[[-O-C(=O)-NH-CH_2-CH_2-CH_2-SiO_{3/2}]_n$ entspricht.

**26.** Verfahren zur Herstellung eines vernetzten Materials nach Anspruch 25, **dadurch gekennzeichnet, dass** es darin besteht, die OH-Gruppen eines Copolymers nach Anspruch 1, das U(OH)-Einheiten umfasst, mit 3-Isocyanatopropyltriethoxysilan umzusetzen und danach eine säurekatalysierte Hydrolyse der mit dem Silan zugeführten Ethoxygruppen durchzuführen.

**27.** Vernetztes Material nach Anspruch 21, **dadurch gekennzeichnet, dass** die Linkergruppe X ein Kieselsäurenetzwerk ist.

**28.** Verfahren zur Herstellung eines vernetzten Materials nach Anspruch 27, **dadurch gekennzeichnet, dass** es darin besteht, die OH-Gruppen eines Copolymers nach Anspruch 1, das U(OH)-Einheiten umfasst, mit 3-Isocyanatopropyltriethoxysilan umzusetzen und dann eine Hydrolyse/Kondensation der OEt-Funktionalitäten durchzuführen.

**29.** Vernetztes Material nach Anspruch 21, **dadurch gekennzeichnet, dass** die Linkergruppe X eines der Segmente A oder B ist.

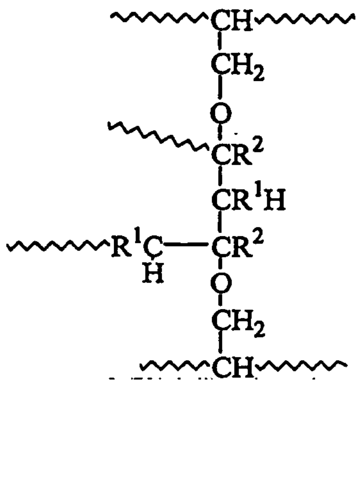

(A)

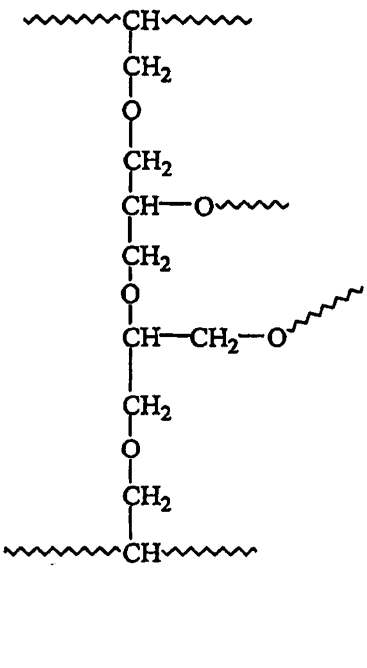

(B)

30. Verfahren zur Herstellung eines vernetzten Materials nach Anspruch 29, **dadurch gekennzeichnet, dass** es darin besteht, ein Copolymer nach Anspruch 1, worin R' eine Vinylethergruppe ist, um die Linkergruppe A zu erhalten, und R' eine Epoxyethergruppe

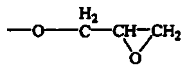

ist, um die Linkergruppe B zu erhalten, auf kationischem Weg unter UV-Strahlung in Gegenwart eines Photoinitiators zu vernetzen.

31. Vernetztes Material nach Anspruch 21, das folgender Formel entspricht:

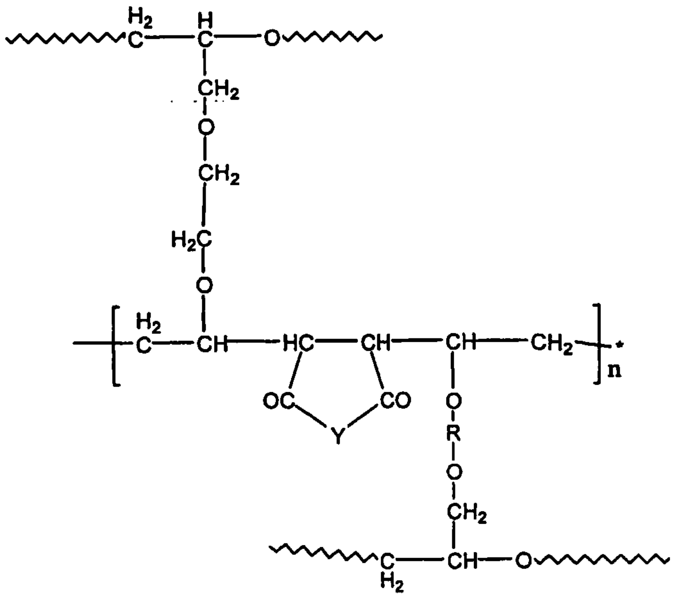

worin Y für O bzw. $NR^5$ steht, $R^5$ für H, ein Alkyl, ein Aryl, ein Oligosiloxan, ein N-Alkylmaleinimid, ein N-Arylmaleinimid oder ein N-Oligosilylmaleinimid steht und n für die Anzahl der Grundeinheiten steht.

32. Verfahren zur Herstellung eines vernetzten Materials nach Anspruch 31, **dadurch gekennzeichnet, dass** es darin besteht, eine Vernetzung eines Copolymers nach Anspruch 1, worin R' eine Vinylethergruppe ist, unter UV-Strahlung in Gegenwart eines Photoinitiators durchzuführen, wobei die Vernetzung in Gegenwart eines Maleinimids, eines Maleinsäureanhydrids oder eines Bismaleinimids, das einer der folgenden Formeln entspricht:

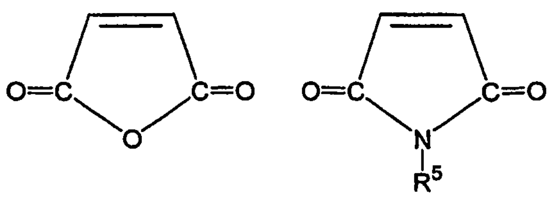

oder in Gegenwart eines Gemischs aus einem Maleinimid und einem Bismaleinimid erfolgt.

33. Vernetztes Material nach Anspruch 21, **dadurch gekennzeichnet, dass** die Linkergruppe X folgende Formel aufweist:

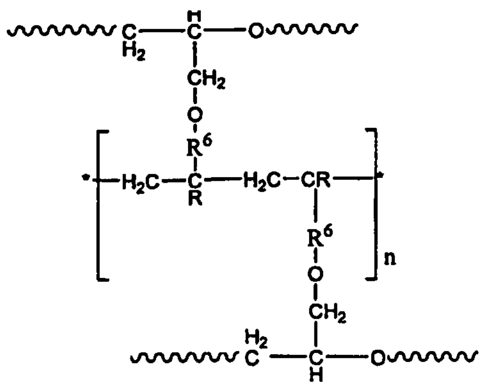

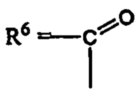 oder 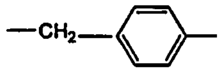 oder 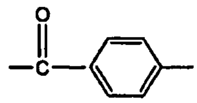 .

**34.** Verfahren zur Herstellung eines vernetzten Materials nach Anspruch 33, **dadurch gekennzeichnet, dass** es darin besteht, ein Copolymer nach Anspruch 1, worin R' für eine Acrylat-, Methacrylat-, Cinnamat- oder Styrylgruppe steht, einer radikalisch-thermischen Vernetzung oder einer Vernetzung unter UV-Strahlung zu unterziehen.

**35.** Ionenleitfähiges Material, das im Wesentlichen aus einem Copolymer nach Anspruch 1 oder einem vernetzten Material nach Anspruch 20 besteht.

**36.** Ionenleitfähiges Material nach Anspruch 35, in dem das Verhältnis O/Li des Copolymers oder des vernetzten Materials weniger als 40 beträgt.

**37.** Ionenleitfähiges Material nach Anspruch 35, **dadurch gekennzeichnet, dass** es ein Lithiumsalz enthält, das aus folgenden ausgewählt ist: $(CF_3SO_2)_2NLi$ (LiTFSI), $(CF_3SO_2)_2CHLi$ (LiTFSM), $(CF_3SO_2)_3CLi$ (LiTTFSM), $CF_3SO_3Li$ (TFLi), $LiClO_4$, $LiPF_6$, $LiBF_4$, $LiAsF_6$, LiBOB, LiFSI oder LiI, wobei weiters die Verbindungen $(NC\text{-}CH_2\text{-}CH_2)_2NCO\text{-}CF(CF_3)\text{-}SO_3Li$ und $(CH_3O\text{-}CH_2CH_2)_2NCO\text{-}CF(CF_3)\text{-}SO_3Li$ angeführt werden können.

**38.** Ionenleitfähiges Material nach Anspruch 35, **dadurch gekennzeichnet, dass** das Copolymer oder das vernetzte Material polare R'-Substituenten aufweist.

**39.** Ionenleitfähiges Material nach Anspruch 35, **dadurch gekennzeichnet, dass** es einen aus aprotischen polaren flüssigen Lösungsmitteln ausgewählten Weichmacher enthält.

**40.** Elektrochemische Vorrichtung, umfassend einen Elektrolyt zwischen zwei Elektroden, **dadurch gekennzeichnet, dass** der Elektrolyt ein ionenleitfähiges Material nach Anspruch 35 ist.

**41.** Selektive Membran aus einem Film aus einem Copolymer nach Anspruch 1, worin das Verhältnis O/Li zwischen 10 und 30 beträgt.

**42.** Bezugsmembran für einen Membransensor, die aus einem Film aus einem Copolymer nach Anspruch 1 besteht, worin das Verhältnis O/Li zwischen 10 und 30 beträgt.

Fig. 1

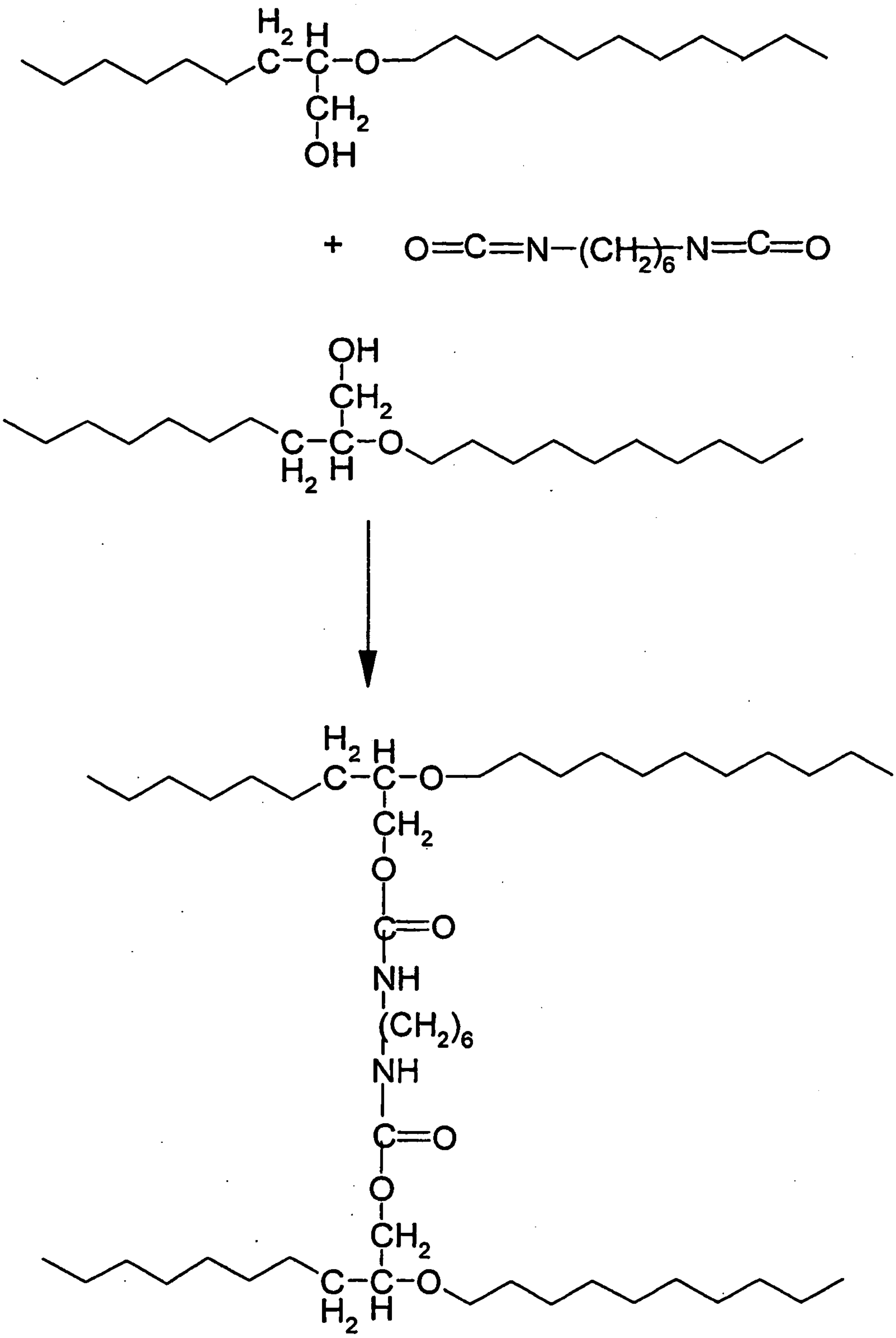

Fig. 2

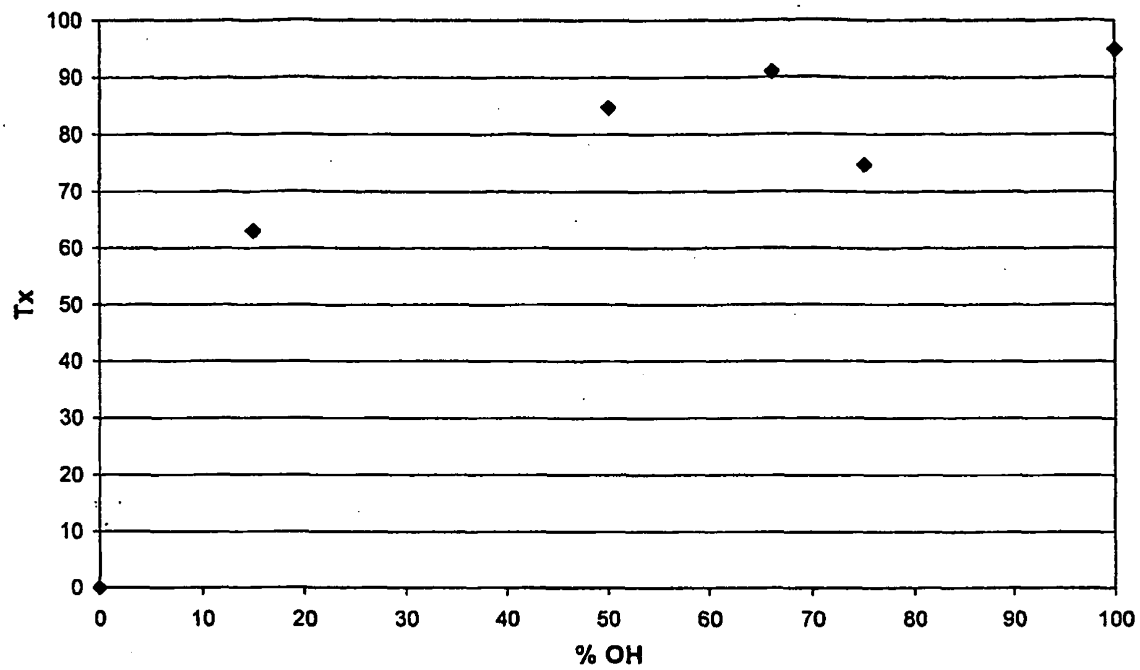
100
90
80
70
60
50
40
30
20
10
0
Tx
0
10
20
30
40
50
60
70
80
90
100
% OH

Fig. 3

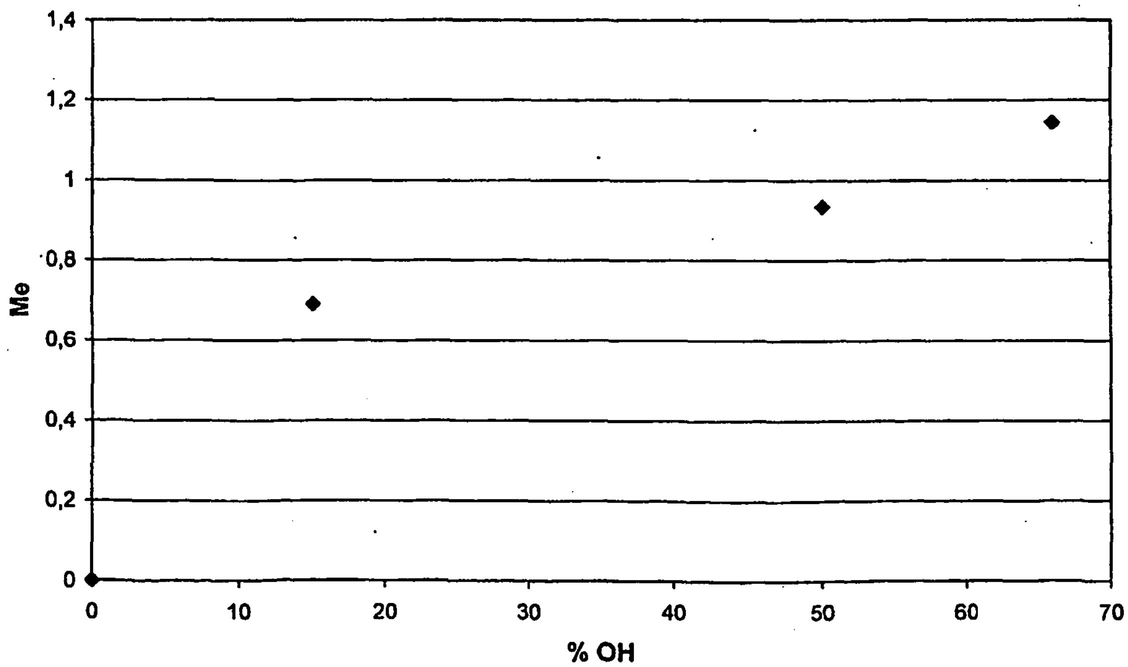
1,4
1,2
1
0,8
0,6
0,4
0,2
0
Me
0
10
20
30
40
50
60
70
% OH

fig. 4

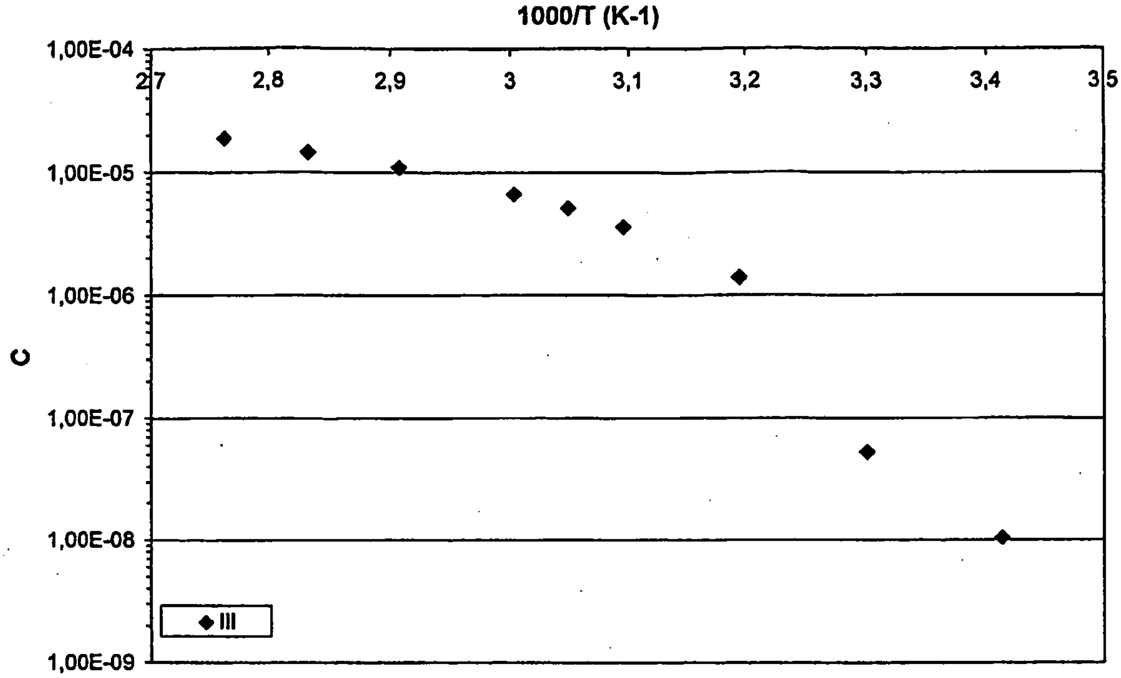
1000/T (K-1)
2,7
2,8
2,9
3
3,1
3,2
3,3
3,4
3,5
1,00E-04
1,00E-05
1,00E-06
1,00E-07
1,00E-08
1,00E-09
C
III

Fig. 5

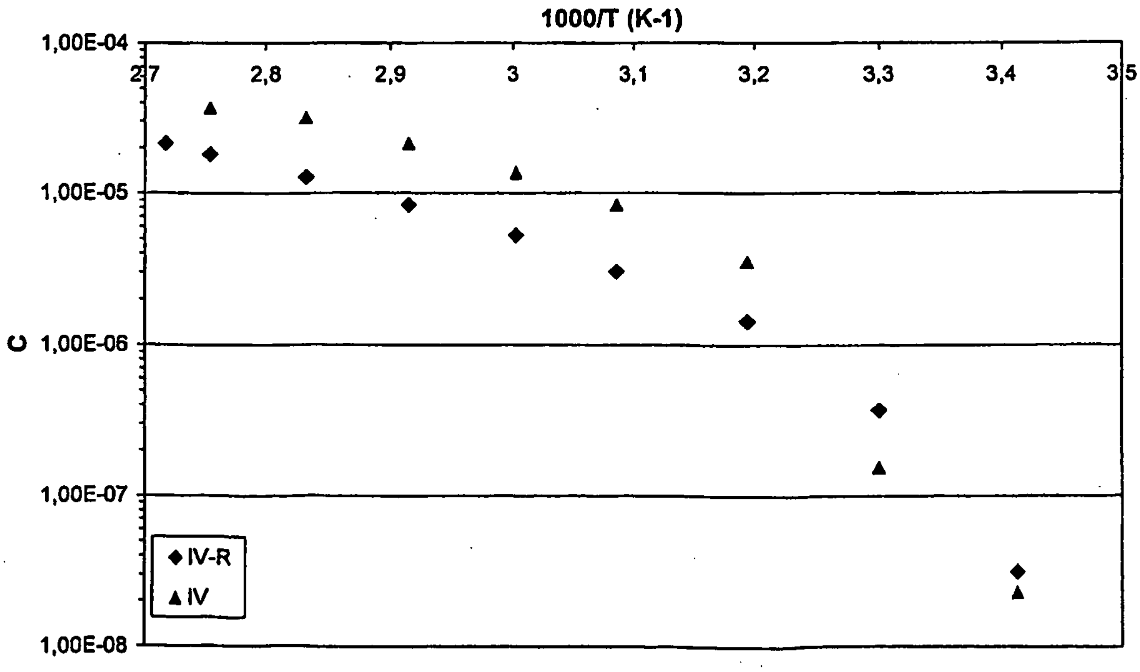
1000/T (K-1)
2,7
2,8
2,9
3
3,1
3,2
3,3
3,4
3,5
1,00E-04
1,00E-05
1,00E-06
1,00E-07
1,00E-08
C
IV-R
IV

Fig. 6

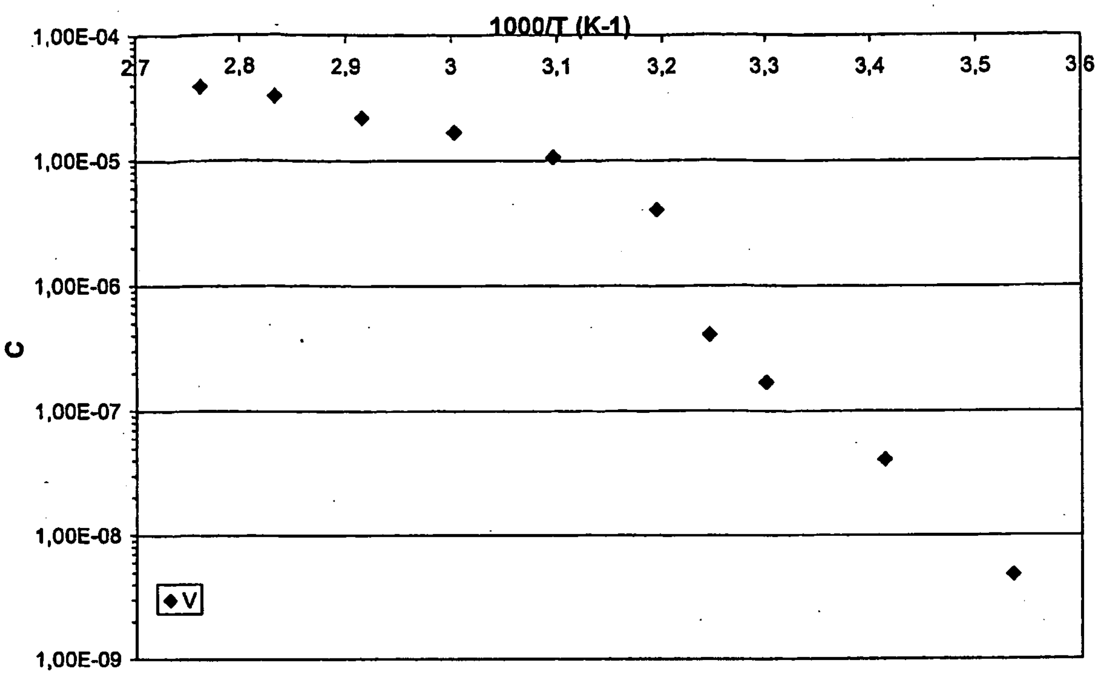
1000/T (K-1)
2,7
2,8
2,9
3
3,1
3,2
3,3
3,4
3,5
3,6
1,00E-04
1,00E-05
1,00E-06
1,00E-07
1,00E-08
1,00E-09
C
V

Fig. 7

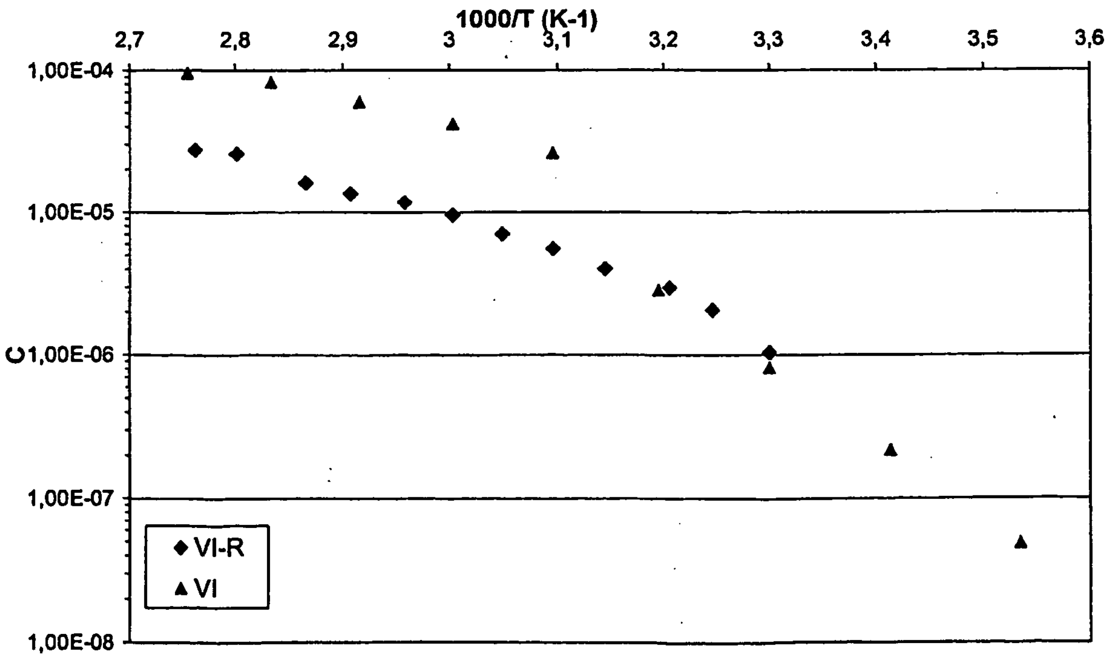
1000/T (K-1)
2,7
2,8
2,9
3
3,1
3,2
3,3
3,4
3,5
3,6
1,00E-04
1,00E-05
C 1,00E-06
1,00E-07
1,00E-08
VI-R
VI

Fig. 8

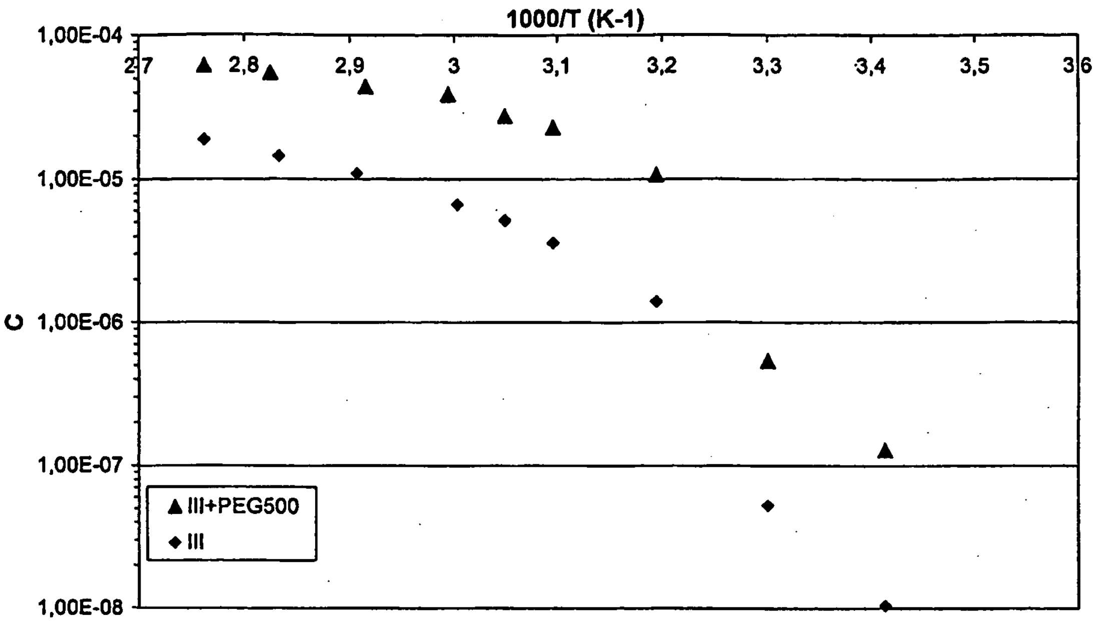
1000/T (K-1)
1,00E-04
1,00E-05
1,00E-06
1,00E-07
1,00E-08
C
2,7
2,8
2,9
3
3,1
3,2
3,3
3,4
3,5
3,6
III+PEG500
III

Fig. 9

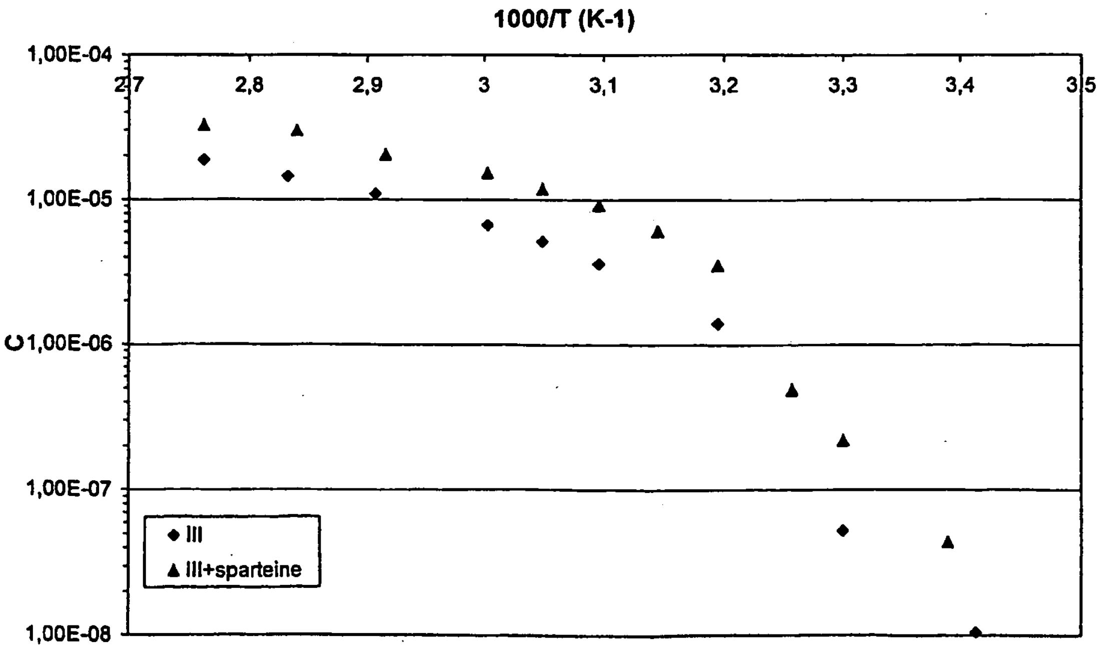
1000/T (K-1)
1,00E-04
1,00E-05
1,00E-06
1,00E-07
1,00E-08
C
2,7
2,8
2,9
3
3,1
3,2
3,3
3,4
3,5
III
III+sparteine

Fig. 10

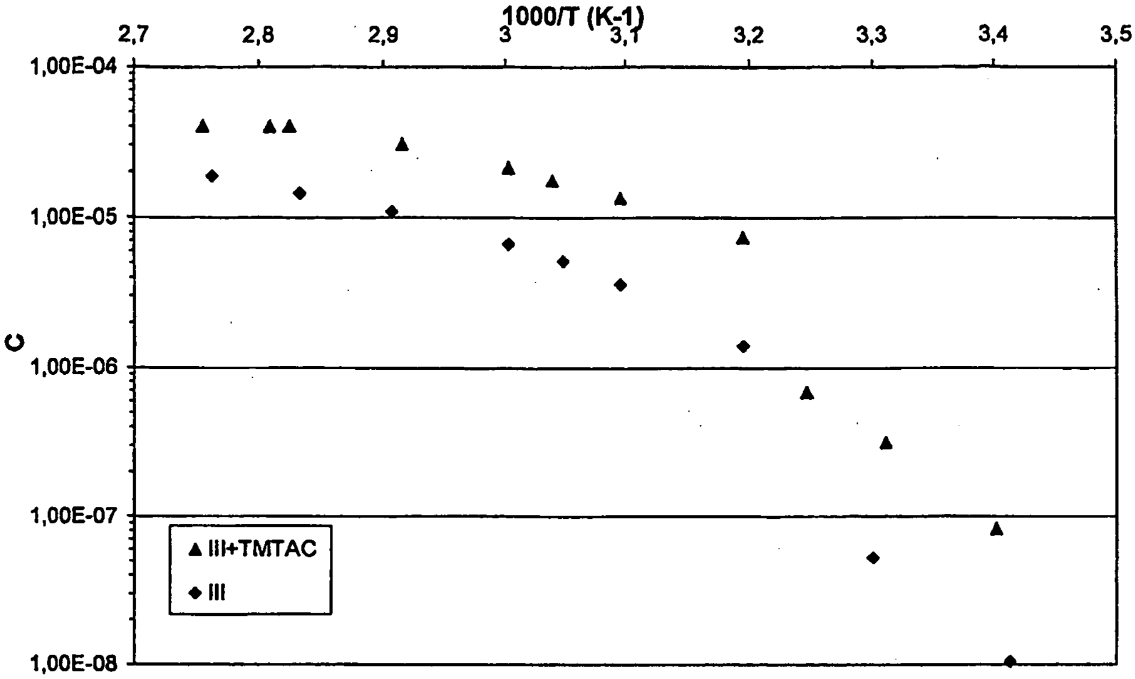
1000/T (K-1)
2,7
2,8
2,9
3
3,1
3,2
3,3
3,4
3,5
1,00E-04
1,00E-05
1,00E-06
1,00E-07
1,00E-08
C
▲ III+TMTAC
◆ III

Fig. 11

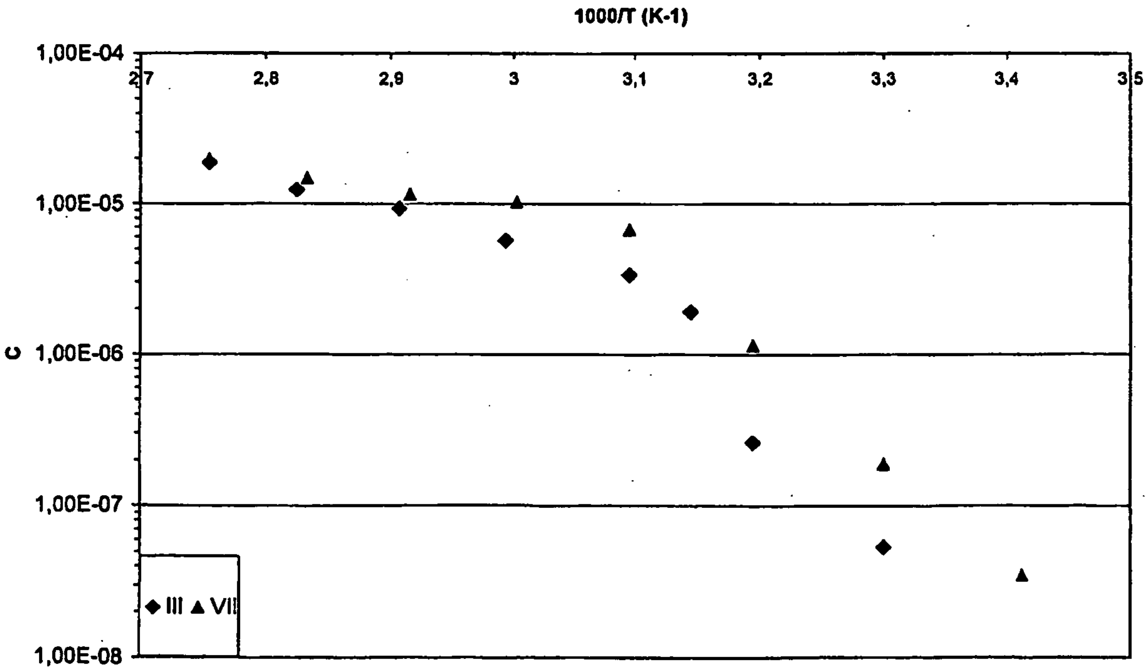
1000/T (K-1)
2,7
2,8
2,9
3
3,1
3,2
3,3
3,4
3,5
1,00E-04
1,00E-05
1,00E-06
1,00E-07
1,00E-08
c
◆ III ▲ VII

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0603370 A
- EP 0657484 A
- EP 0671386 A
- FR 2841255

### Littérature non-brevet citée dans la description

- **X. OLLIVRIN et al.** *Electrochimica Acta,* 2003, vol. 48, 14-161961-69
- **H.L. COHEN.** Journal of Polymer Science : Polymer Chemistry. 1975, vol. 13, 1993-2000